(19) Europäisches Patentamt
European Patent Office
Office européen des brevets

(11) Veröffentlichungsnummer: **0 041 697**
**B1**

(12) # EUROPÄISCHE PATENTSCHRIFT

(45) Veröffentlichungstag der Patentschrift: **03.10.84**

(51) Int. Cl.³: **D 06 P 5/15**, D 06 P 5/12, C 09 B 29/00, C 09 B 29/08, C 09 B 43/124

(21) Anmeldenummer: **81104299.3**

(22) Anmeldetag: **04.06.81**

(54) **Verfahren zum Färben und Bedrucken von synthetischem hydrophobem Fasermaterial.**

(30) Priorität: **06.06.80 DE 3021269**

(43) Veröffentlichungstag der Anmeldung: **16.12.81 Patentblatt 81/50**

(45) Bekanntmachung des Hinweises auf die Patenterteilung: **03.10.84 Patentblatt 84/40**

(84) Benannte Vertragsstaaten: **BE CH DE FR GB IT LI**

(56) Entgegenhaltungen:
**EP - A - 0 013 378**
**FR - A - 879 986**
**FR - A - 1 442 252**
**FR - A - 1 555 571**
**FR - A - 2 321 009**
**GB - A - 2 028 383**

(73) Patentinhaber: **CASSELLA Aktiengesellschaft, Hanauer Landstrasse 526, D-6000 Frankfurt am Main 61 (DE)**

(72) Erfinder: **Bühler, Ulrich, Dr., Nidderauerstrasse 13, D-6369 Schöneck 1 (DE)**
Erfinder: **Ribka, Joachim, Dr., Rügenerstrasse 4, D-6050 Offenbach/Main (DE)**
Erfinder: **Tappe, Horst, Dr., Ringstrasse 9, D-6057 Dietzenbach (DE)**
Erfinder: **Roth, Kurt, Breckenheimerstrasse 35, D-6238 Hofheim/Taunus (DE)**

(74) Vertreter: **Urbach, Hans-Georg, Dr., Hanauer Landstrasse 526, D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft ein Verfahren zur Herstellung von Ätzreservedrucken auf Textilmaterialien, insbesondere solchen, die hydrophobe Fasern, vorzugsweise Polyesterfasern, in überwiegendem Mass enthalten oder aus solchen Fasern bestehen, durch Imprägnieren der Materialien mit Farbflotten, die neben üblichen Färbe- und Klotzhilfsmitteln weissätzbare Farbstoffe und gegebenenfalls ätzmittelbeständige Farbstoffe enthalten, Trocknen oder Antrocknen der geklotzten Materialien und anschliessendes Aufdrucken einer alkalischen Ätzreservepaste, die gewünschtenfalls neben dem Ätzmittel noch ätzmittelbeständige Farbstoffe enthält, und anschliessende Wärmebehandlung bei Temperaturen von 100 bis 230 °C, wobei als weissätzbare Farbstoffe die im Anspruch 1 durch die Formel I charakterisierten Farbstoffe und als Ätzmittel eine Base der im Anspruch 1 angegebenen Art eingesetzt werden.

Auf dem Gebiet des Textildrucks war es seit jeher ein Problem, weisse oder farbige scharf begrenzte Muster auf tiefgefärbtem Hintergrund zu erzeugen. Insbesondere wenn die Herstellung filigranartiger Muster auf dunklem Untergrund gewünscht wird, versagt der direkte Druck des Textilmaterials völlig. Um solche Dessins herzustellen, ist es seit langem bekannt, auf einer mit einem weissätzbaren Farbstoff hergestellten tiefen Hintergrundfärbung eine Ätzpaste in dem gewünschten Muster aufzudrucken und anschliessend durch eine trockene oder nasse Wärmebehandlung den Farbstoff an den mit der Ätzpaste bedruckten Stellen zu zerstören. Nach dem Auswaschen der so erhaltenen Drucke wird das gewünschte Muster weiss auf dunklem Fond erhalten. Es ist auch bereits bekannt, den Ätzdruckpasten Farbstoffe zuzusetzen, die gegen das Ätzmittel resistent sind. In diesem Fall wird gleichzeitig mit der Zerstörung der Fondfärbung eine Färbung des Textilmaterials an den bedruckten Stellen durch den unzerstörbaren Farbstoff vorgenommen. Man erhielt in diesem Fall farbige Drucke auf dunklem Fond. Farbige Drucke auf dunklem Fond können auch erhalten werden, wenn der dunkle Fond mit einer Mischung eines ätzbaren und eines andersfarbigen nichtätzbaren Farbstoffs hergestellt wird, indem man beide Farbstofftypen in die Klotzflotte einbringt.

Bei der Übertragung dieser bekannten Verfahren auf synthetische Fasermaterialien oder Textilmaterialien, die vorzugsweise aus hydrophoben synthetischen Fasern bestehen, ergibt sich insofern ein Problem, als die Ätzung von beispielsweise mit Dispersionsfarbstoffen angefärbten Polyesterfasern sehr schwierig ist. Dispersionsfarbstoffe, die einmal in der Polyesterfaser fixiert, d.h. gelöst sind, sind dem Zugriff wässriger Agenzien weitgehend entzogen und somit auch dem Angriff von wässrigen Ätzpasten. Bei der Herstellung von Ätzdrucken auf hydrophobe Fasern enthaltenden oder aus hydrophoben Fasern bestehenden Textilmaterialien wird daher das bekannte Ätzdruckverfahren in der Weise abgewandelt, dass das Textilmaterial zunächst mit einer Dispersionsfarbstoff enthaltenden Farbflotte geklotzt und getrocknet oder angetrocknet wird, wobei jedoch keine Fixierung des Farbstoffs, d.h. Lösung des Farbstoffs in der hydrophoben Faser, erfolgen darf. Auf das getrocknete oder angetrocknete geklotzte Gewebe wird sodann das gewünschte Muster mit der Ätzdruckpaste aufgedruckt und das geklotzte und bedruckte Gewebe anschliessend einer Wärmebehandlung unterworfen, wobei gleichzeitig der Fondfarbstoff an den nicht bedruckten Stellen in den Polyester einwandert, d.h. fixiert wird und an den bedruckten Stellen der Farbstoff zerstört wird, d.h. keine Färbung erfolgt. Im Hinblick auf diesen Mechanismus wird dieses Verfahren auch als Ätzreservedruck bezeichnet.

Das an sich einfache Verfahren des Ätzreservedrucks beinhaltet eine Reihe technischer Schwierigkeiten, die seinen Einsatz häufig erschweren. So ist es in der Regel nicht einfach, den Fondfarbstoff durch das Ätzmittel restlos zu zerstören. Gelingt dies nicht, so hinterbleibt auf den geätzten Stellen ein farbiger Rückstand, dessen Nuance zwischen gelbbraunen und stumpfviolett bzw. rotstichig grauen Tönen schwanken kann und der den Weissfond an den geätzten Stellen anschmutzt. Dies führt zu unsauber erscheinenden Weissätzen oder für den Fall, dass eine Buntätze hergestellt werden soll, zu einer Verfälschung der Nuance des ätzmittelbeständigen Farbstoffs. Um diese Schwierigkeit zu überwinden, werden Ätzpasten verwendet, die relativ starke Reduktions- oder Oxydationsmittel enthalten, wie z.B. Natriumdithionit in Verbindung mit Alkali, Alkaliformaldehydsulfoxylate oder gar Schwermetallsalze wie beispielsweise Zinn-2-chlorid. Mit derartigen starken Ätzmitteln gelingt es zwar in der Regel, einen einwandfreien Weissätzdruck zu erzielen, jedoch tritt häufig eine Schädigung des Fasermaterials ein, insbesondere dann, wenn die Polyesterfaser noch Begleitfasern, wie beispielsweise Zellulosefasern, enthält. Ferner sind diese Ätzmittel in der Regel nicht billig, und im Falle der Schwermetallätzmittel stellen sie eine zusätzliche ökologische Belastung dar bzw. verursachen sie zusätzliche Aufwendungen bei der Reinigung der Abwässer. Hinzu kommt, dass es nur relativ wenige Farbstofftypen gibt, die gegen derartige Ätzmittel resistent sind, und so ist die Auswahl von ätzmittelbeständigen Farbstoffen, die zur Herstellung von Buntätzen verwendet werden können, relativ gering.

Zur Überwindung dieser Schwierigkeiten benötigt man Dispersionsfarbstoffe für die Hintergrundfärbung, die sich mit möglichst milde wirkenden Agenzien reinweiss ätzen lassen. Aus den Deutschen Offenlegungsschriften 2 612 740, 2 612 741, 2 612 742, 2 612 790, 2 612 791, 2 612 792 sind Dispersionsfarbstoffe bekannt, die in ihrem Molekül mindestens 2 veresterte Carboxylgruppen enthalten. Derartige Farbstoffe verseifen bei der Behandlung mit wässrigen Alkalien unter Bildung von alkalilöslichen, Carboxylgruppen enthaltenden Farbstoffen. Die Verwendung derartiger Farbstoffe als Dispersionsfarbstoffe zum Färben von

Polyestermaterialien hat den Vorteil, dass nicht fixierte Farbstoffreste von dem Textilmaterial durch einfache Behandlung mit alkalisch wirkenden Mitteln abgewaschen werden können. Es ist auch bereits bekannt, dass sich von Färbungen mit Dispersionsfarbstoffen, die als Kupplungskomponente Pyridonderivate enthalten, nicht fixierte Farbstoffreste leicht durch eine Alkalibehandlung von der Faser entfernen lassen. Diese in wässrigen Alkalien löslichen Farbstoffe haben jedoch, soweit es Pyridonfarbstoffe betrifft, den Nachteil, dass sie im wesentlichen ausschliesslich für gelbe oder rotstichig gelbe Nuancen eingesetzt werden können, soweit es Farbstoffe mit veresterten Carboxylgruppen betrifft, dass sie nach der Verseifung der Estergruppen eine gewisse Affinität zu hydrophilen Fasern, wie beispielsweise Wolle, Baumwolle oder Polyamidfasern, aufweisen und diese anfärben oder anschmutzen. Ausserdem stellen die Diazo- bzw. Kupplungskomponenten, die für die Herstellung Carbonsäureestergruppen enthaltender Farbstoffe benötigt werden, keine gängigen Substanzen der chemischen Grossindustrie dar, sondern müssen gesondert für diese Farbstofftypen hergestellt werden, was in der Regel unwirtschaftlich teuer ist. Das Bedürfnis, unter relativ milden Ätzbedingungen reinweiss ätzbare Dispersionsfarbstoffe bei dem Verfahren des Ätzreservedrucks auf hydrophoben Textilmaterialien einzusetzen, konnte daher durch die oben angegebenen Farbstofftypen nicht befriedigt werden.

Aus der DE-A-2 836 391 ist auch bereits ein Verfahren bekannt, nach welchem Ätzreservedrucke auf Polyesterfasermaterial hergestellt werden können, bei welchem alkalisch reagierende Substanzen als Ätzmittel in Kombination mit speziellen weissätzbaren Dispersionsfarbstoffen eingesetzt werden. Das Verfahren hat jedoch den Nachteil, dass die herstellbaren Nuancen im wesentlichen auf den Blau- und Blauviolettbereich eingeschränkt sind. Es gelingt nicht, in Anlehnung an die Struktur der dort angewandten Farbstoffe neue Farbstoffe für den wichtigen Rot- und Bordeauxbereich herzustellen.

Die EP-A-13 378 (veröffentlicht am 13.07.80) betrifft ein Ätzdruckverfahren zur Herstellung von Weiss- und Buntätzen auf Polyester/Baumwolle-Mischfaser-Textilien, bei dem alkalische Ätzmittel und unter anderem auch Monoazofarbstoffe der Formel

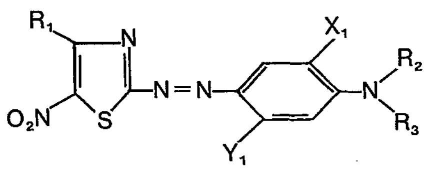

eingesetzt werden, wobei $Y_1$ u.a. eine Alkylsulfonyl- oder Phenylsulfonyl-aminogruppe bedeuten kann. Bei Einsatz dieser Farbstoffgruppe ist dies bekannte Ätzdruckverfahren jedoch ebenfalls auf den violetten und blauen Nuancenbereich eingeschränkt; es ist nicht möglich, mit Farbstoffen der obigen Struktur den wichtigen Rot- und Orangebereich zu erreichen. Hinzu kommt, dass ein grosser Teil der Farbstoffe obiger Struktur durch alkalische Ätzpasten nicht zu seinem Weiss ätzbar ist. In vielen Fällen lassen auch Nass- und/oder Trokkenhitzeplissierechtheit der mit obigen Farbstoffen erhaltenen Ätzdrucke zu wünschen übrig.

Diese Nachteile des aus der EP-A-13 378 bekannten Verfahrens werden durch den Einsatz der erfindungsgemässen Farbstoffe überwunden.

Die FR-A-879 986 betrifft ein Verfahren zur Herstellung von Amino-azobenzolderivaten, die in m-Stellung zur Aminogruppe eine Alkoxygruppe tragen. Bei diesem bekannten Verfahren werden zunächst Diazoverbindungen auf Alkyl- oder Arylsulfonsäure-anilide, die in m-Stellung zur Sulfonamidogruppe eine Alkoxygruppe tragen, gekuppelt. Diese Kupplung gelingt mit wesentlich besserer Ausbeute und viel einheitlicher als die Kupplung auf die entsprechenden freien m-Alkoxyaniline.

Aus den so erhaltenen Sulfonylamino-azobenzolen der Formel

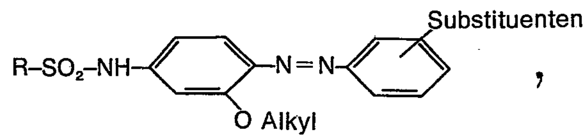 ,

worin R Alkyl oder Aryl bedeutet, wird dann die $R-SO_2$-Gruppe hydrolytisch abgespalten. Die nach der Hydrolyse freigesetzten Aminoazobenzole sollen als Farbstoffe und Farbstoffzwischenprodukte eingesetzt werden. Die unverseiften Sulfonylamino-azobenzole werden jedoch nicht als Farbstoffe empfohlen.

Die FR-A-879 986 gibt keinen Hinweis auf die Einsatzmöglichkeit der Sulfamido-azobenzolderivate als Farbstoffe allgemein oder für den alkalischen Ätzdruck speziell.

Es wurde nun gefunden, dass das Verfahren des alkalischen Ätzdrucks auch auf bislang nicht erreichbare Nuancenbereiche ausgedehnt werden kann, wenn man bei der Durchführung des Ätzreservedrucks auf Textilmaterialien, die ganz oder überwiegend aus hydrophoben synthetischen Fasern bestehen, diese Materialien in an sich bekannter Weise mit Farbflotten, die neben üblichen Färbe- und Klotzhilfsmitteln weissätzbare Farbstoffe und gegebenenfalls ätzmittelbeständige Farbstoffe enthalten, imprägniert, die imprägnierten Gewebe trocknet oder antrocknet, mit einer Ätzreservepaste, die gewünschtenfalls neben dem Ätzmittel noch einen ätzmittelbeständigen Farbstoff enthält, in dem gewünschten Muster bedruckt und anschliessend einer Wärmebehandlung bei 100 bis 230 °C unterwirft, als weissätzbare Farbstoffe solche der Formel I einsetzt,

$$D{-}N{=}N{-}K{-}NHSO_2R \qquad (I)$$

worin D ein Rest der Formel II,

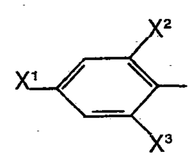

in der $X^1$ und $X^2$ unabhängig voneinander Halogen (insbesondere Fluor, Chlor oder Brom), Nitro, Cyan, Trifluormethyl, Alkyl mit 1 bis 4 C-Atomen, Alkylsulfonyl mit 1 bis 4 C-Atomen, das durch Hydroxy, Methoxy, Ethoxy, Hydroxyethoxy, Methoxyethoxy, Ethoxyethoxy, Chlor, Brom oder Cyan substituiert sein kann, Phenylsulfonyl, das durch Methoxy, Methyl, Chlor, Brom oder Nitro substituiert sein kann, Alkylcarbonyl mit 1 bis 4 C-Atomen im Alkylrest, das durch Hydroxy, Methoxy, Ethoxy, Hydroxyethoxy, Methoxyethoxy, Ethoxyethoxy, Chlor, Brom oder Cyan substituiert sein kann, Benzoyl, in dem der Phenylrest auch durch Alkyl mit 1 bis 4 C-Atomen, Alkoxy mit 1 bis 4 C-Atomen, Nitro oder Halogen substituiert sein kann, Alkoxycarbonyl mit 1 bis 4 C-Atomen im Alkoxyrest, das durch Phenyl, Hydroxy, Alkoxy mit 1 bis 4 C-Atomen oder Alkylcarbonyloxy mit 1 bis 4 C-Atomen im Alkylrest substituiert sein kann, oder Phenylazo, das durch Cyan, Nitro, Chlor, Brom, Trifluormethyl, Alkyl mit 1 bis 4 C-Atomen, Alkoxy mit 1 bis 4 C-Atomen, Alkoxycarbonyl mit 1 bis 4 C-Atomen in der Alkoxygruppe ein-, zwei- oder dreifach (vorzugsweise ein- oder zweifach) substituiert sein kann, bedeutet, $X^3$ Wasserstoff ist oder eine der Bedeutungen von $X^1$ hat;
ein Rest der Formel III,

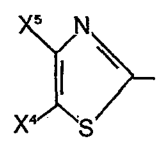

(III)

in der
$X^4$ Nitro, Cyan, Alkylsulfonyl mit 1 bis 4 C-Atomen in der Alkylgruppe, Phenylsulfonyl, das durch Methoxy, Methyl, Chlor, Brom, Nitro substituiert sein kann, Alkoxycarbonyl mit 1 bis 4 C-Atomen in der Alkylgruppe oder Phenoxycarbonyl, das im Phenylrest durch Alkyl mit 1 bis 4 C-Atomen, Alkoxy mit 1 bis 4 C-Atomen, Nitro, Fluor, Chlor oder Brom substituiert sein kann, $X^5$ Wasserstoff, Alkyl mit 1 bis 4 C-Atomen oder Phenyl, das durch Alkyl mit 1 bis 4 C-Atomen, Alkoxy mit 1 bis 4 C-Atomen, Nitro oder Halogen substituiert sein kann, bedeutet;
ein Rest der Formel IV

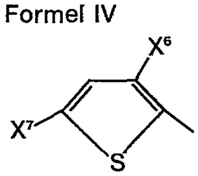

(IV)

in der
$X^6$ Brom, Chlor, Nitro, Cyan, Alkoxycarbonyl mit 1 bis 4 C-Atomen in der Alkylgruppe, Alkylcarbonyl mit 1 bis 4 C-Atomen in der Alkylgruppe oder Alkylsulfonyl mit 1 bis 4 C-Atomen in der Alkylgruppe und $X^7$ Nitro, Cyan, Chlor, Brom, Alkylsulfonyl mit 1 bis 4 C-Atomen in der Alkylgruppe oder Alkoxycarbonyl mit 1 bis 4 C-Atomen in der Alkoxygruppe bedeutet;
6-Nitrobenzthiazolyl-(2) oder
5-Nitrobenzisothiazolyl-(3) ist,
K den Rest einer Kupplungskomponente der 1,4-Phenylen-, 1,4-Naphthylen-, Thiazolyl-2,5- oder 2,5-Thienyl-Reihe und
R Alkyl mit 1 bis 8 C-Atomen, das durch Hydroxy, Chlor, Brom, Cyan, Alkoxy mit 1 bis 4 C-Atomen. Hydroxyalkoxy mit 1 bis 4 C-Atomen, Alkenoxy mit 3 oder 4 C-Atomen, Cycloalkoxy mit 5 oder 6 C-Atomen, Alkylcarbonyloxy mit 2 bis 4 C-Atomen oder durch gegebenenfalls im Phenylkern noch durch Alkyl mit 1 bis 4 C-Atomen, Alkoxy mit 1 bis 4 C-Atomen (vorzugsweise Methyl oder Methoxy), Chlor, Brom oder Cyan mono- oder disubstituiertes Phenyl, Phenoxy, Benzoyloxy monosubstituiert sein kann und das zusätzlich zu den genannten Substituenten noch durch eine Hydroxygruppe substituiert sein kann; Alkenyl mit 2 bis 4 (vorzugsweise 3 oder 4) C-Atomen, das durch Hydroxy, Methoxy, Ethoxy, Chlor, Brom oder Cyan substituiert sein kann, Phenyl, das durch Alkyl mit 1 bis 4 C-Atomen, Hydroxyalkyl mit 1 bis 4 C-Atomen, Alkoxyalkyl mit insgesamt 2 bis 8 C-Atomen, Hydroxyalkoxy-alkyl mit insgesamt 2 bis 8 C-Atomen, Alkanoyloxy-alkyl mit insgesamt 2 bis 8 C-Atomen, Alkoxy mit 1 bis 4 C-Atomen, Hydroxyalkoxy mit 1 bis 4 C-Atomen, Alkoxyalkoxy mit insgesamt 2 bis 8 C-Atomen, Hydroxyalkoxyalkoxy mit insgesamt 2 bis 8 C-Atomen, Alkanoyloxy-alkoxy mit insgesamt 2 bis 8 C-Atomen, Chlor, Brom, Nitro tri-, di- oder monosubstituiert sein kann und das als vierten Substituenten eine Methylgruppe tragen kann, bedeuten und als alkalisches Ätzmittel eine Base, die in 5%iger wässriger Lösung einen pH-Wert von mindestens 8 hervorbringt, einsetzt. Insbesondere eignen sich Alkalimetallhydroxide oder Salze von Alkalimetallen mit schwachen Säuren wie z. B. Alkalicarbonate, -hydrogencarbonate, -phosphate oder -borate.

Besonders bevorzugtes alkalisches Ätzmittel für das erfindungsgemässe Verfahren ist $Na_2CO_3$.

Von den Farbstoffen der Formel I, in denen D ein Rest der Formel II ist, sind für das erfindungsgemässe Verfahren solche bevorzugt, bei denen $X^1$ Halogen (insbesondere Fluor, Chlor oder Brom), Nitro, Cyan, Trifluormethyl, Alkylsulfonyl mit 1 bis 4 C-Atomen, das durch Hydroxy, Methoxy, Ethoxy, Hydroxyethoxy, Methoxyethoxy, Ethoxyethoxy, Chlor, Brom oder Cyan substituiert sein kann, Phenylsulfonyl, das durch Methoxy, Methyl, Chlor, Brom oder Nitro substituiert sein kann, Alkylcarbonyl mit 1 bis 4 C-Atomen im Alkylrest, das durch Hydroxy substituiert sein kann, Benzoyl, in dem der Phenylrest durch Alkyl mit 1 bis 4 C-Atomen, Alkoxy mit 1 bis 4 C-Atomen, Nitro oder Halogen substituiert sein kann, Alkoxycarbonyl mit 1 bis 4 C-Atomen im Alkoxyrest, das durch Phenyl, Hydroxy, Alkoxy mit 1 bis 4 C-Atomen oder Alkylcarbonyloxy mit 1 bis 4 C-Atomen im Alkylrest substituiert sein kann, bedeutet, $X^2$ Fluor, Chlor, Brom, Nitro, Cyan, Alkylsulfonyl mit 1 bis 4 C-Atomen (insbesondere Methylsulfonyl), Alkoxycarbonyl mit 1 bis 4 (insbesondere 1 oder 2) C-Atomen im Alkoxyrest oder Phenylsulfonyl und $X^3$ Wasserstoff, Chlor, Brom, Nitro oder Cyan ist.

Besonders bevorzugt für $X^1$ sind die Elektronen stark anziehenden Substituenten Nitro, Cyan, Alkylsulfonyl mit 1 bis 4, insbesondere 1 oder 2,

C-Atomen, Alkoxycarbonyl mit 1 bis 4, insbesondere 1 oder 2, C-Atomen im Alkoxyrest, Phenylsulfonyl, Benzoyl und Phenylazo. Farbstoffe der Formel I, in denen D ein Rest der Formel II ist, sind auch dann für das erfindungsgemässe Verfahren besonders geeignet, wenn $X^3$ ungleich Wasserstoff ist oder wenn $X^2$ und $X^3$ gleich oder verschieden sind und Wasserstoff, Nitro oder Cyan bedeuten.

Auch erfindungsgemässe Farbstoffe, in denen D einen Rest der Formel III oder IV bedeutet, wobei die Symbole $X^4$, $X^5$ und $X^6$ die obengenannten Bedeutungen haben, sind für den Einsatz in dem erfindungsgemässen Verfahren sehr günstig. Die Farbstoffe, in denen D ein Rest der Formel III ist, sind dann besonders bevorzugt, wenn $X^4$ die Nitrogruppe ist; Farbstoffe, in denen D ein Rest der Formel IV ist, dann, wenn einer der Substituenten $X^6$ oder $X^7$ Nitro oder Cyan ist.

Bevorzugt sind für die vorliegende Erfindung auch Farbstoffe der Formel V

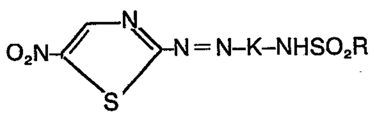 (V)

worin K und R die obigen Bedeutungen haben und insbesondere dann, wenn K der Rest einer Kupplungskomponente der 1,4-Phenylen-Reihe ist.

Als Substituenten für die in den für $X^1$ bis $X^6$ stehenden Substituenten enthaltenen Alkyl- und Alkoxyreste kommen vorzugsweise Hydroxy und Alkoxy mit 1 oder 2 C-Atomen, insbesondere Hydroxy, und für Phenylreste Nitro, Cyan, Chlor, Brom und Alkoxycarbonyl mit 1 bis 4 C-Atomen, insbesondere Nitro, Cyan und Chlor, in Betracht.

Für K stehende Reste einer Kupplungskomponente der 1,4-Phenylenreihe entsprechen der Formel VI

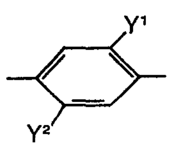 (VI)

worin $Y^1$ Wasserstoff, Halogen (insbesondere Fluor, Chlor oder Brom), Alkyl mit 1 bis 4 C-Atomen, das durch Halogen (insbesondere Chlor oder Brom), Cyan, Hydroxy, Alkanoyloxy mit 1 bis 4 C-Atomen, Alkoxy mit 1 bis 4 C-Atomen oder Alkoxycarbonyl mit 1 bis 4 C-Atomen in dem Alkoxyrest substituiert sein kann; oder Alkoxy mit 1 bis 4 C-Atomen, das durch Halogen (insbesondere Chlor oder Brom), Cyan, Hydroxy, Alkoxy mit 1 bis 4 C-Atomen, Hydroxyalkoxy mit 1 bis 4 C-Atomen, Alkanoyloxy mit 1 bis 4 C-Atomen oder Alkoxycarbonyl mit 1 bis 4 C-Atomen im Alkoxyrest einfach substituiert oder auch durch die Kombination OH/OH oder OH/Chlor zweifach substituiert sein kann, bedeutet und $Y^2$ eine der für $Y^1$ angegebenen Bedeutungen hat oder Alkylcarbonylamino mit 1 bis 4 C-Atomen in dem Alkylrest, das durch Chlor, Brom, Hydroxy, Alkoxy oder Hydroxyalkoxy mit 1 bis 4 C-Atomen, Alkanoyloxy mit 1 bis 4 C-Atomen, Phenoxy oder Alkoxycarbonyl mit 1 bis 4 C-Atomen substituiert sein kann, Benzoylamino, das im Phenylkern durch Hydroxy, Chlor, Alkyl mit 1 bis 4 C-Atomen oder Alkoxy mit 1 bis 4 C-Atomen ein- oder zweifach substituiert sein kann; Alkylsulfonylamino mit 1 bis 4 C-Atomen, das durch Hydroxy oder Alkoxy mit 1 bis 4 C-Atomen substituiert sein kann oder Phenylsulfonylamino, das im Phenylkern durch Hydroxy, Chlor, Alkyl mit 1 bis 4 C-Atomen oder Alkoxy mit 1 bis 4 C-Atomen ein- oder zweifach substituiert sein kann, bedeutet.

Bevorzugt sind für das erfindungsgemässe Verfahren solche Farbstoffe der Formel I mit einem für K stehenden 1,4-Phenylenrest, in denen $Y^1$ Wasserstoff, Alkyl mit 1 bis 4 (insbesondere 1 oder 2) C-Atomen, Methoxy oder Alkoxy mit 2 bis 4 (insbesondere 2 oder 3) C-Atomen, das durch Chlor, Hydroxy, Alkoxy mit 1 oder 2 C-Atomen oder Hydroxyalkoxy mit 2 oder 3 C-Atomen einfach oder, sofern es mindestens 3 C-Atome aufweist, auch durch die Kombination OH/OH oder Cl/OH zweifach substituiert sein kann, ist, ferner solche, in denen $Y^2$ einer der für $Y^1$ stehenden bevorzugten Reste ist, und insbesondere solche, in denen $Y^2$ ein Alkylcarbonylaminorest, insbesondere ein Acetylamino- oder Propionylaminorest, ist, der wie oben angegeben substituiert, insbesondere durch Chlor, Hydroxy, Alkoxy mit 1 oder 2 C-Atomen oder Phenoxy substituiert sein kann.

Für K stehende Reste einer Kupplungskomponente der 1,4-Naphthylenreihe entsprechen der Formel VII

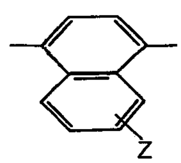 (VII)

worin Z Wasserstoff, Halogen (insbesondere Fluor, Chlor oder Brom), Alkyl mit 1 bis 4 C-Atomen, das durch Halogen (insbesondere Chlor oder Brom), Cyan, Hydroxy, Alkanoyloxy mit 1 bis 4 C-Atomen, Alkoxy mit 1 bis 4 C-Atomen oder Alkoxycarbonyl mit 1 bis 4 C-Atomen im Alkoxyrest substituiert sein kann; oder Alkoxy mit 1 bis 4 C-Atomen, das durch Halogen (insbesondere Chlor oder Brom), Cyan, Hydroxy, Alkoxy mit 1 bis 4 C-Atomen, Hydroxyalkoxy mit 1 bis 4 C-Atomen, Alkanoyloxy mit 1 bis 4 C-Atomen oder Alkoxycarbonyl mit 1 bis 4 C-Atomen im Alkoxyrest einfach substituiert oder auch durch die Kombination OH/OH oder OH/Chlor zweifach substituiert sein kann, bedeutet.

Bevorzugt sind für das erfindungsgemässe Verfahren solche Farbstoffe der Formel I mit einem für K stehenden 1,4-Naphthylenrest, in denen Z Wasserstoff, Alkyl mit 1 bis 4 (insbesondere 1 oder 2) C-Atomen, Methoxy oder Alkoxy mit 1 bis 4 (insbesondere 2 oder 3) C-Atomen, das durch Chlor, Hydroxy, Alkoxy mit 1 oder 2 C-Atomen oder Hydroxyalkoxy mit 2 oder 3 C-Atomen einfach oder, sofern es 3 C-Atome aufweist, auch durch die Kombination OH/OH oder Cl/OH zweifach substituiert sein kann, bedeutet.

Bevorzugte Substituenten R der erfindungsgemäss einzusetzenden Farbstoffe der Formel I sind Alkyl mit 5 bis 8 C-Atomen, Alkyl mit 1 bis 4 C-Atomen, das durch Hydroxy oder Chlor substituiert sein kann; Alkenyl mit 2 bis 4 (vorzugsweise 3 oder 4) C-Atomen und insbesondere Phenyl, das durch Alkyl mit 1 oder 2 C-Atomen, Alkoxy mit 1 oder 2 C-Atomen, Chlor, Brom oder Nitro (vorzugsweise Methyl, Methoxy oder Nitro), tri-, di- oder monosubstituiert sein kann und das als vierten Substituenten eine Methylgruppe tragen kann.

Besonders bevorzugt für das erfindungsgemässe Verfahren sind solche Farbstoffe der Formel I, die mehrere der obengenannten bevorzugten Merkmale aufweisen.

Technisch besonders vorteilhaft in bezug auf Farbstoffausbeute und Ziehvermögen der Drucke sind Mischungen aus zwei oder drei Farbstoffen der allgemeinen Formel I. Derartige erfindungsgemässe Farbstoffmischungen haben einen Gehalt von 10 bis 90%, vorzugsweise 30 bis 70%, eines jeweiligen Farbstoffs der Formel I.

Die Durchführung des erfindungsgemässen Verfahrens erfolgt in der z.B. aus der DE-A-2 836 391 an sich bekannten Weise durch Klotzen der Textilmaterialien mit Farbflotten, die einen oder mehrere Farbstoffe der Formel I neben den bekannten üblichen Färbereihilfsmitteln, wie beispielsweise Dispergiermitteln, Netzmitteln, Schaumdämpfungsmitteln und Klotzhilfsmitteln, enthalten, Abquetschen der geklotzten Gewebebahnen auf eine Flottenaufnahme von 50 bis 120% und anschliessendes Trocknen. Die so vorbereiteten Gewebebahnen werden dann mit einer Ätzreservepaste bedruckt, die als Ätzmittel eine Base, die in 5%iger wässriger Lösung mindestens einen pH-Wert von 8 hervorbringt, sowie die in Druckpasten für den Textildruck üblichen bekannten Zusatzstoffe, insbesondere Verdickungsmittel, enthält. Anschliessend werden die geklotzten und bedruckten Gewebebahnen einer Wärmebehandlung zwischen 100 und 230 °C unterworfen. Nach der Hitzebehandlung, die eine Fixierung der Dispersionsfarbstoffe sowie die Zerstörung der Farbstoffe der Formel I an den mit der Ätzreservedruckpaste bedruckten Stellen zur Folge hat, werden die Textilien in der für Polyestermaterialien üblichen Art und Weise nachbehandelt, heiss und kalt gespült und getrocknet. Eine besondere Ausführungsform des erfindungsgemässen Verfahrens besteht darin, dass die Klotzflotte ausser Farbstoffen der Formel I zusätzlich solche enthält, die alkalibeständig sind und somit durch die erfindungsgemäss einzusetzenden alkalischen Ätzreservedruckpasten nicht zerstört werden. Verfährt man im übrigen wie oben angegeben, so erhält man mehrfarbige Dessins. Eine weitere Möglichkeit zur Durchführung des erfindungsgemässen Verfahrens besteht darin, dass auf den mit Farbstoffen der Formel I geklotzten oder bedruckten Fond Ätzreservedruckpasten aufgedruckt werden, die ihrerseits alkaliresistente Farbstoffe enthalten. Bei anschliessender Fixierung und Fertigstellung der Textilmaterialien wie oben beschrieben werden auch hier mehrfarbige Dessins erhalten.

Die Farbstoffe der Formel I liegen in den Klotzflotten bzw. in den Druckpasten in fein dispergierter Form vor, wie es für Dispersionsfarbstoffe üblich und bekannt ist. Auch die Herstellung der Klotzflotten bzw. Druckpasten, die erfindungsgemäss einzusetzen sind, erfolgt in an sich bekannter Weise durch Mischen der Flotten- bzw. Druckpastenbestandteile mit der nötigen Menge Wasser und flüssigen feindispersen oder festen redispergierbaren Einstellungen der Farbstoffe der Formel I.

Alkaliresistente Dispersionsfarbstoffe, die zur Herstellung von mehrfarbigen Dessins mit dem Farbstoff der Formel I kombiniert werden können, sind die bekannten Handelsfarbstoffe aus der Gruppe der Azo- oder Azomethin-, Chinophthalon-, Nitro- oder Anthrachinonfarbstoffe. Einige Beispiele für alkaliresistente Dispersionsfarbstoffe sind:

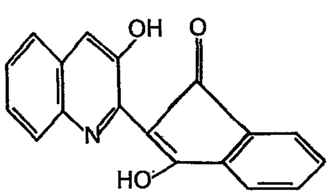
,

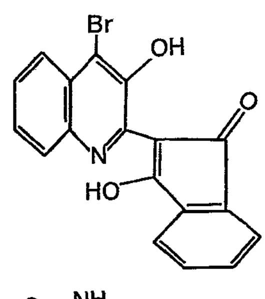
,

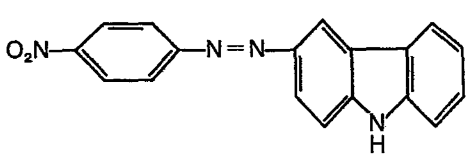
,

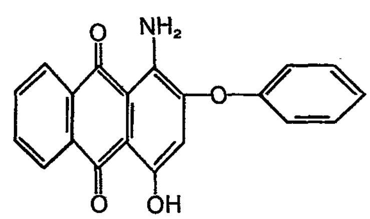
,

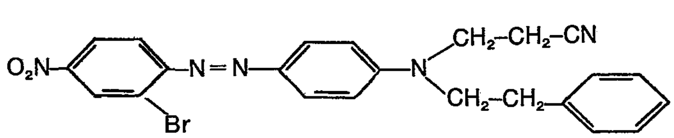
,

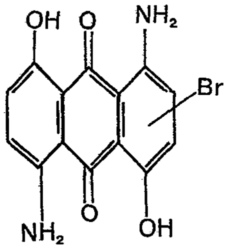

,

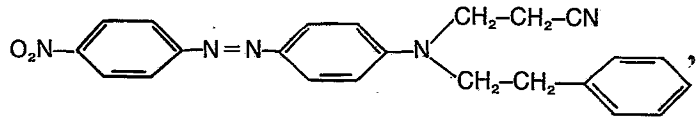

,

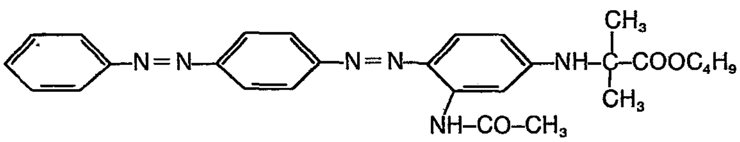

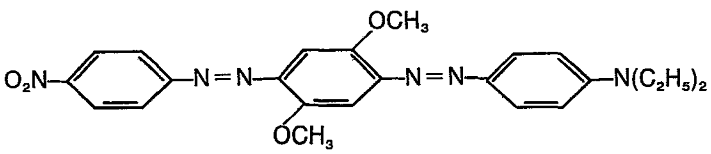

Basen, die als Ätzmittel in der Ätzreservedruckpaste enthalten sind und die in 5%iger wässriger Lösung mindestens einen pH-Wert von 8 hervorbringen, sind in grosser Zahl bekannt. Beispiele für solche Basen sind die Hydroxide der Alkali- und Erdalkalimetalle, Salze von Erdalkali- und Alkalimetallen mit schwachen organischen oder anorganischen Säuren, Ammoniak oder auch aliphatische Amine, wie z.B. Triäthyl-, Tripropyl- oder Tributylamin, Äthanolamin, Dimethyl- oder Diäthyläthanolamin, Diäthanolamin, Methyl-, Äthyl- oder Propyl-diäthanolamin oder Triäthanolamin. Üblicherweise werden als Basen Erdalkalihydroxyde, wie z.B. Calciumhydroxyd, Alkalihydroxyde, wie beispielsweise Natrium- oder Kaliumhydroxyd, oder Alkalisalze von schwachen anorganischen Säuren, wie beispielsweise Alkalicarbonat oder Trialkaliphosphat, eingesetzt. Vorzugsweise wird als Base in den Ätzreservedruckpasten Natrium- oder Kaliumhydroxyd oder Natrium- oder Kaliumcarbonat oder Natrium- oder Kaliumcarbonat verwendet.

Aus der DE-B-1 061 284 ist es bekannt, den Farbstoff der Formel VIII

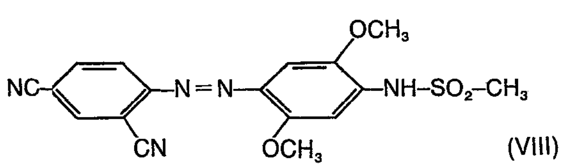

(VIII)

zum Färben von Polyesterfasern einzusetzen, und aus der Britischen Patentschrift 960 662 ist es bekannt, metall-modifizierte Polyalkylenfasern, z.B. Polypropylenfasern, mit dem Farbstoff der Formel IX

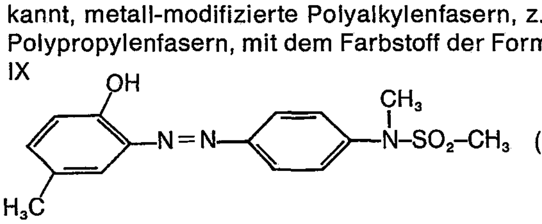

(IX)

zu färben.

Farbstoffe der Formel I, in denen D ein Rest der Formeln III oder IV ist, sowie solche, in denen K ein Rest der 1,4-Naphthylenreihe, der Thiazolyl-2,5-Reihe oder der 2,5-Thienylreihe ist, sind neu.

Neu sind auch Farbstoffe der Formel I, in denen D ein Rest der Formel II

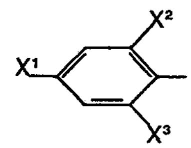

(II)

ist, worin $X^1$, $X^2$ und $X^3$ die im Anspruch 1 angegebenen Bedeutungen haben,

K ein Rest der Formel VI

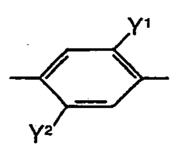

(VI)

ist, worin $Y^1$ Wasserstoff, Halogen (insbesondere Fluor, Chlor oder Brom), Alkyl mit 1 bis 4 C-Atomen, das durch Halogen (insbesondere Chlor oder Brom), Cyan, Hydroxy, Alkanoyloxy mit 1 bis 4 C-Atomen, Alkoxy mit 1 bis 4 C-Atomen oder Alkoxycarbonyl mit 1 bis 4 C-Atomen in dem Alkoxyrest substituiert sein kann; oder Alkoxy mit 1 bis 4 C-Atomen, das durch Halogen (insbesondere Chlor oder Brom), Cyan, Hydroxy, Alkoxy mit 1 bis 4 C-Atomen Hydroxyalkoxy mit 1 bis 4 C-Atomen, Alkanoyloxy mit 1 bis 4 C-Atomen oder Alkoxycarbonyl mit 1 bis 4 C-Atomen im Alkoxyrest einfach substituiert oder auch durch die Kombination OH/OH oder OH/Chlor zweifach substituiert sein kann, bedeutet und $Y^2$ eine der für $Y^1$ angegebenen Bedeutungen mit Ausnahme von Alkoxy hat oder Alkylcarbonylamino mit 1 bis 4 C-Atomen in dem Alkylrest, das durch Chlor, Brom, Hydroxy, Alkoxy oder Hydroxyalkoxy mit 1 bis 4 C-Atomen, Alkanoyloxy mit 1 bis 4 C-Atomen, Phenoxy oder Alkoxycarbonyl mit 1 bis 4 C-Atomen substituiert sein kann, Benzoylamino, das im Phenylkern durch Hydroxy, Chlor, Alkyl mit 1 bis 4 C-Atomen oder Alkoxy mit 1 bis 4 C-Atomen ein- oder zweifach substituiert sein kann; Alkylsulfonylamino mit 1 bis 4 C-Atomen, das durch Hydroxy oder Alkoxy mit 1 bis 4 C-Atomen substituiert sein kann oder Phenylsulfonylamino, das im Phenylkern durch Hydroxy, Chlor, Alkyl mit 1 bis 4 C-Atomen oder Alkoxy mit 1 bis 4 C-Atomen ein- oder zweifach substituiert sein kann, bedeutet und R Phenyl ist, das durch Alkyl mit 1 oder 2 C-Atomen, Alkoxy mit 1 oder 2 C-Atomen, Chlor, Brom oder Nitro (vorzugsweise Methyl, Methoxy oder Nitro) tri-, di- oder monosubstituiert sein kann und das als vierten Substituenten eine Methylgruppe tragen kann.

Die neuen Farbstoffe der Formel I können hergestellt werden, indem man in an sich bekannter Weise ein Amin der Formel D–$NH_2$ diazotiert und mit einem Sulfonamid der Formeln X, XI, XII oder XIII

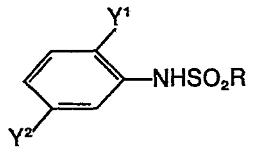

(X)

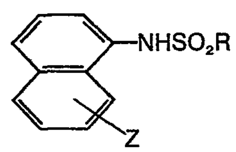

(XI)

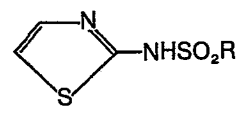

(XII)

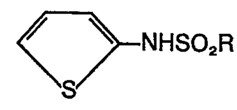

(XIII)

worin D, $Y^1$, $Y^2$, Z und R die angegebenen Bedeutungen haben, kuppelt.

Die Diazotierung der Amine der Formel D–$NH_2$ kann beispielsweise wie folgt vorgenommen werden:

Einer Lösung oder Suspension des Amins in einer wässrigen starken anorganischen Säure setzt man 1 bis 1,1 Äquivalente einer wässrigen Natriumnitritlösung zu. Man kann das Amin auch in einer organischen Säure wie z.B. Essigsäure oder Propionsäure oder einem Gemisch dieser Säuren, lösen bzw. suspendieren und durch Zugabe von Nitrosylschwefelsäure diazotieren. Die resultierende Lösung oder Suspension der Diazoverbindung wird dann bei Temperaturen von −20 bis +30 °C, vorzugsweise −10 bis +10 °C mit einer Lösung der Kupplungskomponente III in Wasser, welches eine Säure und/oder eine teilweise oder ganz wasserlösliche organische Verbindung wie z.B. Isobutanol oder Aceton enthält, vereinigt. Zur Zerstörung der überschüssigen salpetrigen Säure versetzt man die Kupplungslösung gegebenenfalls mit Sulfaminsäure oder Harnstoff. Nach beendeter Kupplung, die gegebenenfalls durch Zugabe von Basen, wie z.B. Natriumacetat, erleichtert werden kann, wird der Farbstoff der Formel I in der üblichen Weise isoliert.

Die neuen erfindungsgemässen Farbstoffe der Formel I können auch dadurch hergestellt werden, dass man einen Farbstoff XIV

$$D{-}N{=}N{-}K{-}NH_2 \qquad (XIV)$$

mit sulfonylierenden Mitteln, die den Rest –$SO_2$–R einführen, umsetzt. Als sulfonylierende Mittel werden in der Regel Halogenide von Sulfonsäuren der Formel

$$Hal{-}SO_2{-}R,$$

worin Hal ein Halogenatom ist und R die obengenannten Bedeutungen hat, eingesetzt.

Bevorzugte Sulfonylierungsmittel sind die Sulfochloride $ClSO_2$–R.

Die benötigten Ausgangsfarbstoffe können in an sich bekannter Weise durch Diazotierung einer Diazokomponente D–$NH_2$ und anschliessende Kupplung mit einer Kupplungskomponente K–$NH_2$ hergestellt werden. Die Sulfonylierung des Farbstoffs XIV mit dem Sulfonylierungsmittel, das den Rest –$SO_2$–R einführt, kann bei Normal- oder erhöhter Temperatur in Abwesenheit oder vorzugsweise in Anwesenheit eines Lösungsmittels durchgeführt werden. Geeignete Lösungsmittel sind zum Beispiel Pyridin, 1,2-Dichlorethan, Chlorbenzol oder Wasser.

Die Temperatur kann bei der Sulfonylierung 0 °C bis zur Rückflusstemperatur des verwendeten Lösungsmittels betragen. (Gegebenenfalls kann auch das überschüssige Sulfonylierungsmittel als Lösungsmittel dienen). Normalerweise beträgt die Temperatur bei der Sulfonylierung 0° bis 200 °C, vorzugsweise 20° bis 150 °C. Während der Sulfonylierung, die normalerweise in 5 Minuten bis 2 Stunden beendet ist, wird zweckmässigerweise gerührt. In manchen Fällen ist bei der Sulfonylierung eine Kühlung erforderlich.

Sulfonylierungsmittel, die den Rest –$SO_2$–R einführen, sind bekannt bzw. können nach den bekannten Vorschriften leicht hergestellt werden.

Technisch besonders vorteilhaft in bezug auf Farbstoffausbeute, Ziehvermögen und Echtheit der Färbungen bzw. Drucke sind Mischungen von zwei oder drei Farbstoffen der allgemeinen Formel(I). Derartige erfindungsgemässe Farbstoffmischungen haben einen Gehalt von 10 bis 90%, vorzugsweise 30 bis 70%, eines jeweiligen Farbstoffs der Formel(I). Derartige erfindungsgemässe Mischungen können dadurch hergestellt werden, dass man zwei oder drei Farbstoffe der Formel (XIV) mit sulfonylierenden Mitteln, die den Rest –$SO_2$–R einführen, umsetzt, oder, vorzugsweise, dass man einen Farbstoff der Formel (XIV) gleichzeitig oder nacheinander mit zwei oder drei verschiedenen sulfonylierenden Mitteln umsetzt.

Die erfindungsgemässen Mischungen können auch dadurch hergestellt werden, dass man zwei oder drei Amine der Formel D–$NH_2$ diazotiert und

auf zwei oder drei Kupplungskomponenten der Formel K–$NHSO_2R$ kuppelt, wobei sich vorzugsweise diese Kupplungskomponenten nur im Rest R unterscheiden.

Die neuen Farbstoffe der Formel I eignen sich auch hervorragend zum Färben und Bedrucken von hydrophoben Fasermaterialien, z. B. aus Polyamid, Polyacryl-nitril, Cellulose-2 ½-acetat, Cellulosetriacetat, Polyestern. Sie werden auf diese Materialien nach den üblichen Färbe- und Druckverfahren appliziert und liefern hierbei gelbe bis rotstichig blaue Färbungen und Drucke mit hoher Farbstärke und ausgezeichneten Echtheiten, insbesondere hoher Lichtechtheit, hoher Trockenhitzeplissier- und Trockenhitzefixierechtheit. Sie zeichnen sich dabei durch geringe Reduktionsempfindlichkeit und Temperaturempfindlichkeit, sehr gutes Thermomigrationsverhalten und gutes Aufbau- und Ausziehvermögen aus, und sie sind dabei überraschenderweise dem aus der DE-B 1 061 284 für den gleichen Zweck bekannten Farbstoff der Formel (VIII) erheblich überlegen.

Hydrophobe Fasermaterialien im Sinne der vorliegenden Erfindung sind solche Materialien, insbesondere Textilmaterialien, die aus synthetischen, hydrophoben Fasern bestehen oder sie in Mischung mit anderen Fasern, wie z. B. Zellulose oder Wolle, enthalten. Synthetische hydrophobe Fasern sind z. B. solche aus Polyamid, Polyacrylnitril, Cellulose-2 ½-acetat, Cellulosetriacetat und insbesondere aus Polyestern, vorzugsweise Polyglycolterephthalat.

Die Färbung kann nach verschiedenen bekannten Methoden erfolgen. Es kann nach dem Carrier-Verfahren in Gegenwart von Fixierbeschleunigern bei Temperaturen von etwa 80 bis 105 °C, nach dem HT-Verfahren bei Temperaturen von 110 bis 140 °C gefärbt werden.

Bei dem HT-Verfahren wird die Färbung in druckfesten Färbeaggregaten unter dem Dampfdruck der Färbeflotte ausgeführt. Ferner kann nach dem Thermosolprozess gearbeitet werden, bei dem die zu färbende Ware mit der Färbeflotte geklotzt wird und gegebenenfalls nach einer Zwischentrocknung über erhitzte Walzen oder durch einen heissen Luft- oder Dampfstrom geleitet wird, wobei der Farbstoff in der Faser fixiert wird. Hierbei werden vornehmlich Temperaturen von 180 bis 230 °C zur Anwendung gebracht.

Zur Herstellung der Färbeflotten werden die erforderlichen Mengen der Dispersionsfarbstoffe in feiner Verteilung, vorzugsweise in Form flüssiger oder fester Farbstoffeinstellungen mit dem Färbemedium, vorzugsweise mit Wasser, so weit verdünnt, dass sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel, zugesetzt.

Für den Textildruck werden die erforderlichen Mengen der Dispersionsfarbstoffe in feiner Verteilung, vorzugsweise in Form der flüssigen oder redispergierbaren festen Farbstoffeinstellungen zusammen mit Verdickungsmitteln wie z. B. Alkali-Alginaten oder dergleichen und gegebenenfalls weiteren Zusätzen wie z. B. Fixierbeschleunigern, Netzmitteln und Oxydationsmitteln zu Druckpasten verknetet.

Die Textilwaren werden mit diesen Druckpasten bedruckt und gegebenenfalls nach einer Zwischentrocknung einer Hitzebehandlung unterworfen, wobei Fixierung des Farbstoffs in der Faser eintritt.

Hierzu wird die bedruckte Ware in Gegenwart eines Carriers bei Temperaturen zwischen etwa 80 bis 110 °C oder auch in Abwesenheit eines Carriers bei etwa 110 bis 180 °C gedämpft oder auch nach dem sogenannten Thermofixierverfahren bei etwa 180° bis 230 °C behandelt.

Beispiel 1

30 Teile des Farbstoffs der Formel 1

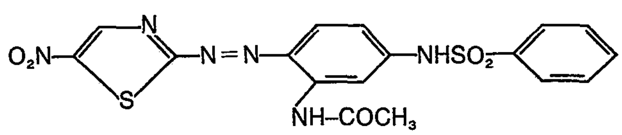

(1)

werden in feiner Verteilung zu einer Klotzflotte gegeben, die 937 Teile Wasser, 3 Teile Mononatriumphosphat, 10 Teile Natriumchlorat und 20 Teile eines Polymerisationsproduktes auf Acrylsäurebasis als Antimigrationsmittel auf 1000 Teile enthält. Nach dem Trocknen wird mit einer Druckpaste, die 600 Teile einer wässrigen 10%igen Johannisbrotkernmehlätherverdickung, 120 Teile Wasser, 80 Teile Natriumcarbonat, 100 Teile Polyäthylenglykol 400 und 100 Teile Glycerin auf 1000 Teile enthält, überdruckt. Nach dem Fixieren mit überhitztem Dampf während 7 Minuten bei 175 °C, reduktivem Nachbehandeln, Seifen, anschliessendem Spülen und Trocknen erhält man einen braunen Druck mit sehr guten Echtheiten, vor allem guter Licht-, Trockenhitzefixier-, Reib- und Waschechtheit. An den Stellen, auf die die sodahaltige Druckpaste aufgedruckt wird, erhält man einen sehr guten Weissfond mit scharfen Konturen.

Der in diesem Beispiel verwendete Farbstoff wurde wie folgt hergestellt:

Eine Lösung von 0,2 Mol in einem Gemisch aus Schwefelsäure, Essigsäure und Propionsäure nach der Vorschrift des Beispiels 1 der DE-B-1 019 415 diazotiertem 2-Amino-5-nitrothiazol wird bei 0 bis 5 °C zu einer Lösung von 58,0 g Benzolsulfonsäure-3′-acetylaminoanilid in 320 ml i-Butanol gegeben, und es wird 30 Minuten nachgerührt. Danach gibt man auf 3 Liter Eiswasser, rührt über Nacht durch, filtriert, wäscht mit Wasser und trocknet unter vermindertem Druck. Man erhält so 68,0 g eines schwarzen Farbstoffpulvers, das bei 216 °C unter Zersetzung schmilzt.

Beispiel 2

Anstelle von 30 Teilen des Farbstoffs der Formel 1 werden 20 Teile des Farbstoffs der Formel 2

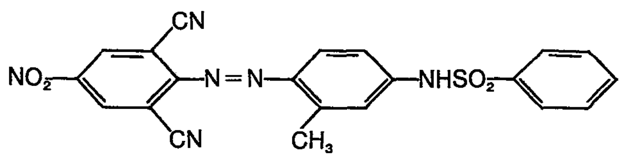

(2)

verwendet, und im übrigen wird so verfahren, wie im Beispiel 1 angegeben. Man erhält einen gelbbraunen Druck mit sehr guten coloristischen Eigenschaften, insbesondere guter Licht-, Thermofixier-, Reib- und Waschechtheit und an den geätzten Stellen sehr guten Weissfond mit scharfen Konturen.

Der in diesem Beispiel verwendete Farbstoff wurde wie folgt hergestellt:

60,5 g 2-Cyan-4-nitro-6-bromanilin werden in 200 ml Eisessig und 200 g Schwefelsäure bei 15 bis 20 °C mit 68,0 g 41%iger Nitrosylschwefelsäure diazotiert. Die so erhaltene Diazolösung wird bei 10 bis 15 °C auf 61,8 g der in 500 ml 75%ige Essigsäure suspendierten Kupplungskomponente der Formel

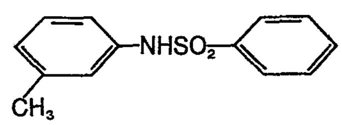

gekuppelt, wobei zur Vervollständigung der Kupplung über Nacht bei Raumtemperatur durchgerührt wird. Das ausgefallene Produkt wird abgesaugt, mit Wasser gewaschen und getrocknet. Man erhält auf diese Weise als gelbbraunes Pulver 42,8 g eines Farbstoffs der Formel 3

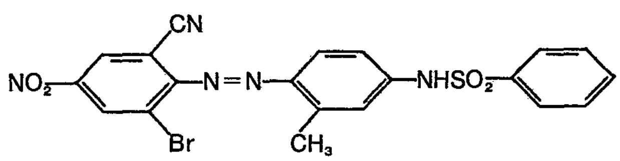

(3)

vom Schmelzpunkt 218 bis 20 °C.

10,8 g Kupfer-1-cyanid und 1,2 g Natriumcyanid werden in 100 ml Dimethylformamid 15 Minuten gerührt, und es werden 50 g des Farbstoffs der Formel 3 zugesetzt. Dann erhitzt man auf 110 bis 115 °C, rührt 15 Minuten bei dieser Temperatur und lässt über Nacht kaltrühren. Anschliessend wird der Farbstoff mit 300 ml Methanol gefällt, abgesaugt, mit Methanol und Wasser nachgewaschen, mit einer Lösung von 2,0 g Natriumcyanid in 400 ml Wasser verrieben, abgesaugt, mit Wasser neutral gewaschen und getrocknet. Man erhält 31,6 g eines Farbstoffs der Formel 2, der bei 248 bis 50 °C schmilzt.

Beispiel 3

Anstelle von 30 Teilen des Farbstoffs von Beispiel 1 werden 20 Teile des Farbstoffs der Formel 4

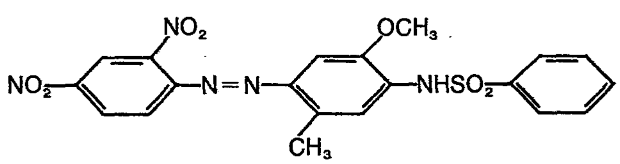

(4)

verwendet und im übrigen wird so verfahren, wie im Beispiel 1 angegeben. Man erhält einen braunen Druck mit sehr guten coloristischen Eigenschaften, insbesondere mit einer guten Licht-, Trockenhitzefixier-, Reib- und Waschechtheit und an den geätzten Stellen einen sehr guten Weissfond mit scharfen Konturen.

Der zu diesem Beispiel verwendete Farbstoff wurde wie folgt hergestellt:

2,4-Dinitranilin wird in der üblichen Weise auf p-Kresidin gekuppelt. 33,1 g des so erhaltenen Produkts werden in 500 ml Pyridin bei 75 °C mit 26,5 g Benzolsulfochlorid versetzt und 2 Stunden bei dieser Temperatur nachgerührt. Dann lässt man abkühlen, giesst auf Eis/Salzsäure, saugt das ausgefallene Produkt ab, wäscht mit Wasser, 0,5n Salzsäure und wieder mit Wasser und trocknet. Man erhält 44,5 g eines Farbstoffs der Formel 4 vom Schmelzpunkt 187 bis 189 °C.

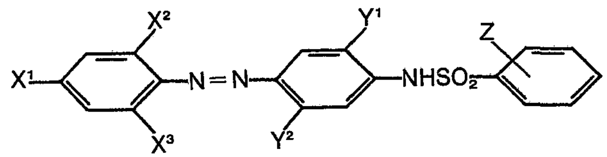

| Nr. | $X^1$ | $X^2$ | $X^3$ | $Y^1$ | $Y^2$ | Z | Nuance |
|---|---|---|---|---|---|---|---|
| 1 | $NO_2$ | CN | CN | H | $CH_3$ | H | gelbbraun |
| 2 | $NO_2$ | CN | CN | H | $NHCOCH_3$ | H | scharlach |
| 3 | $NO_2$ | CN | CN | F | H | H | goldgelb |
| 4 | $NO_2$ | $NO_2$ | CN | $O(CH_2)_2OH$ | $O(CH_2)_2OH$ | H | scharlach |
| 5 | $NO_2$ | $NO_2$ | CN | H | $O(CH_2)_4OH$ | H | orange |
| 6 | $NO_2$ | $SO_2CH_3$ | CN | $OCH_3$ | Cl | H | orange |
| 7 | $NO_2$ | $SO_2C_6H_5$ | CN | H | Cl | H | goldgelb |
| 8 | CN | $NO_2$ | CN | $OC_4H_9$ | $NHSO_2CH_3$ | H | orange |
| 9 | $COOC_2H_5$ | $COOC_2H_5$ | $NO_2$ | H | $CH_2O(CH_2)_2OH$ | H | orange |
| 10 | $NO_2$ | CN | Cl | $OCH_3$ | $CH_3$ | H | gelbbraun |
| 11 | $NO_2$ | CN | Cl | $CH_2OH$ | $CH_2OH$ | H | gelbbraun |
| 12 | $NO_2$ | CN | Br | H | $NHCOCH_2COOCH_3$ | H | orange |
| 13 | $NO_2$ | CN | Br | $OCH_2CHOHCH_2OH$ | $OCH_2CHOHCH_2OH$ | H | orange |
| 14 | $NO_2$ | $NO_2$ | Cl | $O(CH_2)_4OH$ | Cl | H | orange |
| 15 | $NO_2$ | $NO_2$ | Cl | H | $CH_3$ | H | goldgelb |
| 16 | $NO_2$ | $NO_2$ | Cl | $CH_3$ | $NHCOC_2H_5$ | H | braun |
| 17 | $NO_2$ | $NO_2$ | Br | $OCH_2COOCH_3$ | H | H | gelbbraun |
| 18 | $NO_2$ | $NO_2$ | Br | $(CH_2)_2COOC_2H_5$ | $(CH_2)_2COOC_2H_5$ | H | gelbbraun |
| 19 | $CF_3$ | $NO_2$ | CN | $OCH_3$ | $OCH_3$ | H | orange |
| 20 | $CF_3$ | CN | CN | H | $NHSO_2C_6H_5$ | H | orange |
| 21 | $COO(CH_2)_2OH$ | $NO_2$ | Br | $O(CH_2)_2OH$ | $NHCOCH_2OH$ | H | orange |
| 22 | $COOCH_3$ | $NO_2$ | Br | $OCH_2CHOHCH_2OH$ | H | H | gelbbraun |
| 23 | $COC_2H_5$ | $NO_2$ | Br | $OCH_2COOCH_3$ | Br | H | gelbbraun |
| 24 | $COC_6H_5$ | $NO_2$ | Cl | $CH_3$ | H | H | gelbbraun |
| 25 | $COOC_2H_5$ | $NO_2$ | Cl | H | $NHCOCH_3$ | H | orange |
| 26 | $COOC_6H_5$ | $NO_2$ | CN | $O(CH_2)_2OCH_3$ | $NHCOCH_3$ | H | scharlach |
| 27 | $COOC_3H_7$ | CN | CN | H | $C(CH_3)_2OH$ | H | orange |
| 28 | $CH_3$ | CN | CN | $O(CH_2)_2OH$ | $O(CH_2)_2OH$ | H | orange |
| 29 | $C_2H_5$ | $NO_2$ | CN | H | $NHCOCH_2OH$ | H | goldgelb |
| 30 | F | CN | CN | H | $NHCOCH_3$ | H | orange |
| 31 | $4–NO_2–C_6H_4–N=N–$ | CN | CN | $CH_3$ | H | H | orange |
| 32 | $4–NO_2–C_6H_4–N=N–$ | CN | Cl | $O(CH_2)_2OH$ | H | H | orange |
| 33 | $2–CN–4–NO_2–C_6H_3–N=N–$ | CN | Cl | $OCH_3$ | $NHCO(CH_2)_2COOCH_3$ | H | scharlach |
| 34 | $4–COOCH_3–C_6H_4–N=N–$ | CN | CN | Cl | $NHCOCH_3$ | H | scharlach |
| 35 | $NO_2$ | CN | H | $OCH_3$ | $CH_2OH$ | H | orange |

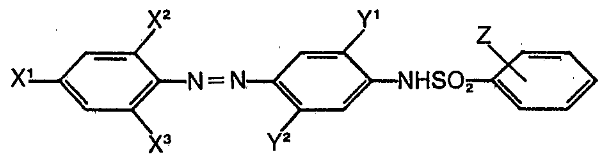

| Nr. | $X^1$ | $X^2$ | $X^3$ | $Y^1$ | $Y^2$ | Z | Nuance |
|---|---|---|---|---|---|---|---|
| 36 | $NO_2$ | CN | H | H | $NHCO(CH_2)_3OH$ | H | orange |
| 37 | $NO_2$ | $NO_2$ | H | H | $O(CH_2)_2COOCH_3$ | H | goldgelb |
| 38 | $NO_2$ | $NO_2$ | H | $CH_3$ | $CH_3$ | H | goldgelb |
| 39 | $NO_2$ | $NO_2$ | H | $O(CH_2)_4OH$ | $O(CH_2)_4OH$ | H | orange |
| 40 | $NO_2$ | $COOCH_3$ | H | $OCH_3$ | $NHCOCH_2COOCH_3$ | H | orange |
| 41 | CN | CN | H | $CH_3$ | H | H | goldgelb |
| 42 | CN | $NO_2$ | H | $OCH_3$ | Br | H | orange |
| 43 | $COOCH_3$ | $NO_2$ | H | $OCH_3$ | $CH_2OH$ | H | orange |
| 44 | $COO(CH_2)_2OH$ | $NO_2$ | H | H | $CH_2O(CH_2)_2OH$ | H | goldgelb |
| 45 | $COOC_2H_5$ | CN | H | H | $NHSO_2C_2H_5$ | H | orange |
| 46 | $COCH_3$ | $NO_2$ | H | $CH_2COOCH_3$ | Cl | H | goldgelb |
| 47 | $CO(CH_2)_3OH$ | $NO_2$ | H | $O(CH_2)_2OCH_3$ | $NHCOC_3H_7$ | H | orange |
| 48 | $COC_6H_4$–4–$NO_2$ | $NO_2$ | H | $OC_3H_7$ | $OC_3H_7$ | H | orange |
| 49 | $COC_6H_4$–4–$NO_2$ | CN | H | $OC_4H_9$ | $CH_3$ | H | orange |
| 50 | $CF_3$ | $NO_2$ | H | H | $C_3H_7$ | H | goldgelb |
| 51 | $CF_3$ | CN | H | $O(CH_2)_2Cl$ | $O(CH_2)_2Cl$ | H | orange |
| 52 | 2,4–Di–$NO_2$–$C_6H_3$–N=N– | CN | H | $C_3H_7$ | $C_3H_7$ | H | orange |
| 53 | $NO_2$ | $NO_2$ | CN | $OCH_3$ | $OCH_3$ | 2–$NO_2$ | scharlach |
| 54 | $NO_2$ | $SO_2CH_3$ | CN | Cl | $NHCOCH_3$ | 2–$NO_2$ | scharlach |
| 55 | $COOCH_3$ | $NO_2$ | H | H | $OCH_3$ | 3–$NO_2$ | goldgelb |
| 56 | $NO_2$ | CN | CN | $O(CH_2)_2COOCH_3$ | $CH_3$ | 3–$NO_2$ | orange |
| 57 | $NO_2$ | $SO_2CH_3$ | CN | H | $NHSO_2C_6H_5$ | 3–$NO_2$ | orange |
| 58 | $NO_2$ | Cl | CN | $O(CH_2)_2OH$ | $NHCOCH_3$ | 4–Cl–3–$NO_2$ | orange |
| 59 | $NO_2$ | Br | CN | H | $C(CH_3)_2OH$ | 4–$CH_3$–3–$NO_2$ | goldgelb |
| 60 | CN | $NO_2$ | CN | $OCH_3$ | Br | 2–$CH_3$–5–$NO_2$ | orange |
| 61 | $NO_2$ | CN | Cl | $O(CH_2)_2OH$ | $O(CH_2)_2OH$ | 3,5–Di–$NO_2$–4–$CH_3$ | orange |
| 62 | $NO_2$ | CN | CN | H | $NHCO(CH_2)_2OH$ | 3,5–Di–$NO_2$–4–$CH_3$ | orange |
| 63 | $COOC_3H_7$ | $NO_2$ | Br | $O(CH_2)_2OH$ | H | 3,5–Di–No₂–2–$CH_3$ | goldgelb |
| 64 | $NO_2$ | CN | CN | $OCH_3$ | $OCH_3$ | 2,4–Di–$CH_3$–3,5–Di–$NO_2$ | orange |

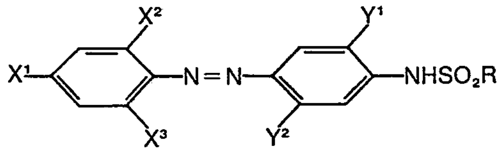

| Nr. | $X^1$ | $X^2$ | $X^3$ | $Y^1$ | $Y^2$ | R | Nuance |
|---|---|---|---|---|---|---|---|
| 65 | $NO_2$ | $NO_2$ | CN | $OCH_3$ | $CH_3$ | $CH_3$ | orange |
| 66 | $NO_2$ | CN | Cl | H | $O(CH_2)_2OH$ | $CH_3$ | gelbbraun |
| 67 | CN | CN | $NO_2$ | H | $NHCOCH_3$ | $CH_3$ | orange |
| 68 | $CH_3$ | CN | CN | $C_2H_5$ | H | $CH_3$ | goldgelb |
| 69 | $NO_2$ | $NO_2$ | Br | Cl | $NHCOCH_2OH$ | $CH_3$ | braun |
| 70 | $COOC_2H_5$ | $NO_2$ | Cl | $OCH_3$ | $OCH_3$ | $CH_3$ | braun |
| 71 | CN | CN | H | $O(CH_2)_4OH$ | Cl | $CH_3$ | gelbbraun |
| 72 | $NO_2$ | CN | CN | $O(CH_2)_2COOCH_3$ | $NHCOC_3H_7$ | $C_2H_5$ | scharlach |
| 73 | $NO_2$ | CN | Br | $CH_2OH$ | $CH_2OH$ | $C_2H_5$ | gelbbraun |
| 74 | $NO_2$ | $NO_2$ | Cl | H | Cl | $C_2H_5$ | goldgelb |
| 75 | $CF_3$ | CN | CN | $O(CH_2)_2OH$ | $O(CH_2)_2OH$ | $C_2H_5$ | scharlach |
| 76 | $C_6H_5-SO_2$ | $NO_2$ | Cl | $C_2H_5$ | H | $C_2H_5$ | orange |
| 77 | $NO_2$ | $SO_2CH_3$ | CN | Br | Br | $C_2H_5$ | orange |
| 78 | $CH_3CO$ | $NO_2$ | Cl | H | $CH_3$ | $C_3H_7$ | orange |
| 79 | $NO_2$ | CN | CN | $C_2H_5$ | $C_2H_5$ | $C_3H_7$ | orange |
| 80 | $COOCH_3$ | $NO_2$ | H | $CH_3$ | $NHCOCH_2O(CH_2)_2OH$ | $C_3H_7$ | orange |
| 81 | $NO_2$ | $NO_2$ | H | Br | H | $C_3H_7$ | goldgelb |
| 82 | $NO_2$ | $NO_2$ | Cl | $OC_2H_5$ | $C(CH_3)_2OH$ | $C_3H_7$ | orange |
| 83 | $SO_2C_2H_5$ | $NO_2$ | H | $CH_2OH$ | Br | $C_3H_7$ | gelbbraun |
| 84 | $NO_2$ | $NO_2$ | CN | $OCH_3$ | $OCH_3$ | $C_3H_7$ | scharlach |
| 85 | $NO_2$ | $SO_2CH_3$ | CN | $O(CH_2)_2OH$ | H | $CH=CH_2$ | orange |
| 86 | CN | CN | H | Cl | H | $CH=CH_2$ | goldgelb |
| 87 | $CF_3$ | $NO_2$ | Br | $O(CH_2)_2COOCH_3$ | $O(CH_2)_2COOCH_3$ | $CH=CH_2$ | orange |
| 88 | COO-$(CH_2)_2OH$ | $NO_2$ | H | H | $NHCO(CH_2)_2OH$ | $CH=CH_2$ | orange |
| 89 | $NO_2$ | $SO_2CH_3$ | CN | H | $CH_2OH$ | $CH=CH_2$ | gelbbraun |
| 90 | $NO_2$ | CN | CN | H | F | $CH_2Cl$ | goldgelb |
| 91 | $NO_2$ | $COOCH_3$ | Cl | $CH_3$ | $NHCOCH_2Cl$ | $CH_2Cl$ | orange |
| 92 | $C_2H_5$ | CN | CN | $CHOHCH_3$ | Cl | $CH_2Cl$ | goldgelb |
| 93 | $NO_2$ | CN | Cl | $O(CH_2)_2O(CH_2)_2OH$ | H | $CH_2Cl$ | goldgelb |
| 94 | $NO_2$ | CN | Br | H | $NHCOCH_2COOC_2H_5$ | $(CH_2)_2Cl$ | orange |
| 95 | $NO_2$ | $NO_2$ | Cl | Cl | Cl | $(CH_2)_2Cl$ | goldgelb |
| 96 | $COCH_3$ | $NO_2$ | Cl | $OC_2H_5$ | $CH_3$ | $(CH_2)_2Cl$ | orange |
| 97 | $NO_2$ | $SO_2C_2H_5$ | CN | $O(CH_2)_2OH$ | $NHCOC_3H_7$ | $(CH_2)_2Cl$ | scharlach |
| 98 | $SO_2C_6H_5$ | $NO_2$ | CN | H | $O(CH_2)_4OH$ | $(CH_2)_2OH$ | orange |
| 99 | $NO_2$ | $NO_2$ | CN | $OCH_3$ | Br | $(CH_2)_2OH$ | goldgelb |
| 100 | $NO_2$ | CN | H | $CHOHCH_3$ | H | $(CH_2)_2OH$ | goldgelb |
| 101 | $NO_2$ | $NO_2$ | CN | Br | Br | $(CH_2)_2OH$ | goldgelb |
| 102 | $CH_3$ | CN | CN | H | $NHCO(CH_2)_2OH$ | $(CH_2)_2OH$ | goldgelb |
| 103 | CN | CN | H | $C_2H_5$ | $NHCOCH_2OH$ | $CH_2CHOHCH_2Cl$ | orange |
| 104 | $COC_6H_5$ | $NO_2$ | Cl | $O(CH_2)_2OCOCH_3$ | H | $CH_2CHOHCH_2Cl$ | orange |
| 105 | $NO_2$ | $SO_2C_2H_5$ | CN | $O(CH_2)_2OH$ | $O(CH_2)_2OH$ | $CH_2CHOHCH_2Cl$ | scharlach |

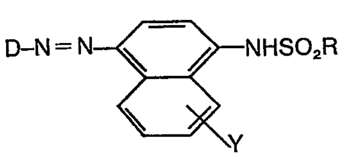

| Nr. | D | Y | R | Nuance |
|---|---|---|---|---|
| 106 | 2,4–Di–$NO_2$–$C_6H_3$ | H | $C_6H_5$ | orange |
| 107 | 2,6–Di–CN–4–$NO_2$–$C_6H_2$– | H | $C_6H_5$ | orange |
| 108 | 2–$NO_2$–4–$COOC_2H_5$–$C_6H_2$ | 8–Cl | $C_6H_5$ | goldgelb |
| 109 | 5–$NO_2$–Thiazolyl–2– | H | $C_6H_5$ | orange |
| 110 | 5–$NO_2$–Thiazolyl–2– | 5–$OCH_3$ | 2–$NO_2$–$C_6H_4$ | orange |

| Nr. | D | Y | R | Nuance |
|---|---|---|---|---|
| 111 | 6–$NO_2$–Benzthiazolyl–2– | H | $C_2H_5$ | orange |
| 112 | 3–$COOC_2H_5$–5–$NO_2$–Thiazo-lyl–2– | H | $C_6H_5$ | orange |
| 113 | 2–CN–4–$NO_2$–$C_6H_5$– | 6–$COOCH_3$ | $CH_2CH_2OH$ | goldgelb |
| 114 | 2–$NO_2$–4–$COOCH_3$–$C_6H_5$– | H | 3–$NO_2$–$C_6H_4$ | goldgelb |
| 115 | 2,4–Di–$NO_2$–6–Cl–$C_6H_2$– | H | $CH_3$ | goldgelb |

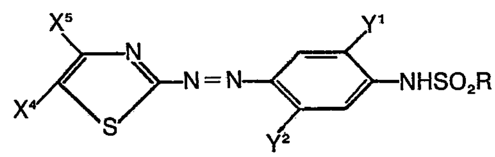

| Nr. | $X^4$ | $X^5$ | $Y^1$ | $Y^2$ | R | Nuance |
|---|---|---|---|---|---|---|
| 116 | $No_2$ | H | H | $CH_3$ | $C_6H_5$ | gelbbraun |
| 117 | $NO_2$ | H | H | $O(CH_2)_2COOCH_3$ | $C_6H_5$ | orange |
| 118 | $No_2$ | H | $OCH_3$ | $CH_3$ | 2–$NO_2$–$C_6H_4$ | orange |
| 119 | $NO_2$ | H | $O(CH_2)_4OH$ | $O(CH_2)_4OH$ | $C_2H_5$ | scharlach |
| 120 | $No_2$ | H | $O(CH_2)_2OH$ | $NHCOCH_3$ | $C_6H_5$ | scharlach |
| 121 | $No_2$ | H | $CH_3$ | $NHCO(CH_2)_3OH$ | $C_6H_5$ | scharlach |
| 122 | $NO_2$ | $CH_3$ | H | $NHCO(CH_2)_2COOC_2H_5$ | $C_6H_5$ | scharlach |
| 123 | $NO_2$ | $CH_3$ | Cl | Cl | $(CH_2)_2OH$ | orange |
| 124 | $NO_2$ | $C_6H_5$ | $O(CH_2)_4OH$ | Cl | $C_6H_5$ | orange |
| 125 | $COOCH_3$ | H | H | $CH_2OH$ | $C_6H_5$ | goldgelb |
| 126 | $COOC_3H_7$ | H | H | $NHSO_2$–2–$NO_2$–$C_6H_5$ | $C_6H_5$ | orange |
| 127 | CN | H | $O(CH_2)_2COOCH_3$ | H | $C_6H_5$ | orange |
| 128 | CN | H | $CH_2OH$ | $CH_2OH$ | $CH_2CHOHCH_2Cl$ | orange |
| 129 | $SO_2CH_3$ | H | $OCH_3$ | $CH_2O(CH_2)_2OH$ | $C_6H_5$ | orange |
| 130 | $SO_2C_6H_5$ | H | H | $OCH_2CHOHCH_2OH$ | $C_6H_5$ | goldgelb |

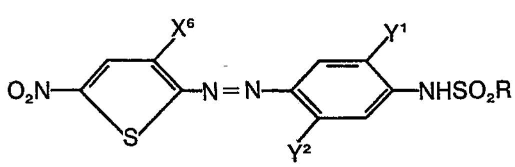

| Nr. | $X^6$ | $Y^1$ | $Y^2$ | R | Nuance |
|---|---|---|---|---|---|
| 131 | H | H | $O(CH_2)_2COOH$ | $C_6H_5$ | goldgelb |
| 132 | Cl | $OC_2H_5$ | $C_2H_5$ | 3–$NO_2$–$C_6H_4$ | orange |
| 133 | Br | Cl | Cl | $C_6H_5$ | goldgelb |
| 134 | Br | $C(CH_3)_2OH$ | $C(CH_3)_2OH$ | $C_6H_5$ | goldgelb |
| 135 | CN | $OC_2H_5$ | $OC_2H_5$ | $ClCH_2$ | scharlach |
| 136 | $SO_2CH_3$ | H | $NHCOCH_3$ | $C_6H_5$ | scharlach |
| 137 | $No_2$ | $O(CH_2)_2OH$ | $NHCOC_4H_9$ | 3,5–Di–$NO_2$–4–$CH_3$ | scharlach |
| 138 | $NO_2$ | $OCH_3$ | $CH_3$ | $C_6H_5$ | orange |
| 139 | $COOCH_3$ | H | $O(CH_2)_2COOC_2H_5$ | $C_2H_5$ | orange |

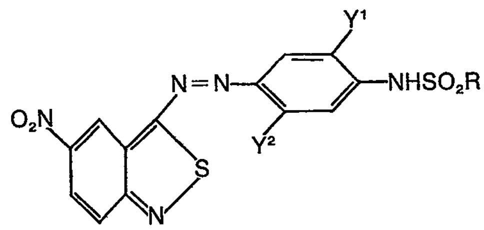

| Nr. | $Y^1$ | $Y^2$ | R | Nuance |
|---|---|---|---|---|
| 140 | H | $NHCOCH_3$ | $C_6H_5$ | scharlach |
| 141 | H | $O(CH_2)_4OH$ | $CH_3$ | orange |
| 142 | $OCH_3$ | Cl | $C_6H_5$ | scharlach |
| 143 | $(CH_2)_3OH$ | $(CH_2)_3OH$ | $3-NO_2-4-CH_3-C_6H_3$ | orange |
| 144 | Br | Br | $C_6H_5$ | orange |
| 145 | $O(CH_2)_2OCOCH_3$ | $NHCOCH_2OH$ | $CH=CH_2$ | scharlach |

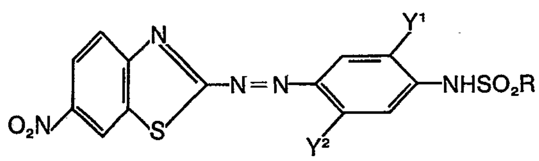

| Nr. | $Y^1$ | $Y^2$ | R | Nuance |
|---|---|---|---|---|
| 146 | $OCH_2$-<br>$COOCH_3$ | H | $C_6H_5$ | orange |
| 147 | $CH_3$ | $NHCOCH_2Cl$ | $C_6H_5$ | scharlach |
| 148 | $OCH(CH_3)_2$ | Cl | $CH_3$ | orange |
| 149 | H | F | $C_3H_7$ | goldgelb |
| 150 | $OCH_3$ | $OCH_3$ | $C_6H_5$ | orange |
| 151 | H | $NHCO(CH_2)_3OH$ | $C_6H_5$ | orange |

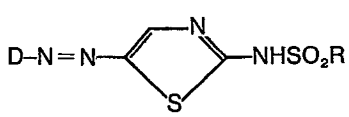

| Nr. | D | R | Nuance |
|---|---|---|---|
| 152 | $5-NO_2$–Thiazolyl–2– | $C_6H_5$ | scharlach |
| 153 | $5-NO_2$–Thiazolyl–2– | $C_2H_5$ | scharlach |
| 154 | $5-NO_2$–Thiazolyl–2– | $3-NO_2-C_6H_4$ | scharlach |
| 155 | $5-NO_2$–Benzisothiazolyl–3 | $C_6H_5$ | scharlach |
| 156 | 2,6–Di–CN–$4-NO_2-C_6H_2$– | $C_3H_7$ | orange |
| 157 | 2–CN–$4-NO_2$–6–Cl–$C_6H_2$– | $C_6H_5$ | orange |

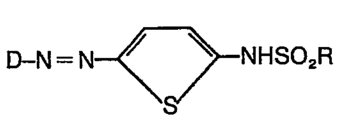

| Nr. | D | R | Nuance |
|---|---|---|---|
| 158 | $5-No_2$–Thienyl–2– | $C_6H_5$ | scharlach |
| 159 | $5-NO_2$–Thienyl–2– | $CH_3$ | scharlach |
| 160 | $2-NO_2-4-COOCH_3-C_6H_3$ | $CH_2CH_2Cl$ | orange |
| 161 | 2,4–Di–$No_2$–6–Cl–$C_6H_2$ | $C_6H_5$ | orange |
| 162 | $5-NO_2$–Thiazolyl–2– | $CH_2CH_2CH$ | scharlach |

**Patentansprüche**

1. Verfahren zur Herstellung von weissen oder verschiedenfarbigen Mustern auf farbigem Untergrund auf Textilmaterialien enthaltend oder bestehend aus hydrophoben synthetischen Fasern, insbesondere Polyesterfasern, durch Imprägnieren der Materialien mit Farbflotten, die neben üblichen Färbe- und Klotzhilfsmitteln weissätzbare Farbstoffe und gegebenenfalls ätzmittelbeständige Farbstoffe enthalten, Trocknen oder Antrocknen der geklotzten Materialien, Aufdrucken einer alkalischen Ätzreservepaste, die gewünschtenfalls neben dem Ätzmittel noch ätzmittelbeständige Farbstoffe enthält, und anschliessende Wärmebehandlung bei Temperaturen von 100 bis 230 °C, dadurch gekennzeichnet, dass als weissätzbare Farbstoffe solche der Formel I eingesetzt werden,

$$D{-}N{=}N{-}K{-}NHSO_2R \qquad (I)$$

worin

D ein Rest der Formel II,

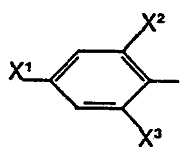

(II)

in der $X^1$ und $X^2$ unabhängig voneinander Halogen (insbesondere Fluor, Chlor oder Brom), Nitro, Cyan, Trifluormethyl, Alkyl mit 1 bis 4 C-Atomen, Alkylsulfonyl mit 1 bis 4 C-Atomen, das durch Hydroxy, Methoxy, Ethoxy, Hydroxyethoxy, Methoxyethoxy, Ethoxyethoxy, Chlor, Brom oder Cyan substituiert sein kann, Phenylsulfonyl, das durch Methoxy, Methyl, Chlor, Brom oder Nitro substituiert sein kann, Alkylcarbonyl mit 1 bis 4 C-Atomen im Alkylrest, das durch Hydroxy, Methoxy, Ethoxy, Hydroxyethoxy, Methoxyethoxy, Ethoxyethoxy, Chlor, Brom oder Cyan substituiert sein kann, Benzoyl, in dem der Phenylrest durch Alkyl mit 1 bis 4 C-Atomen, Alkoxy mit 1 bis 4 C-Atomen, Nitro oder Halogen substituiert sein kann, Alkoxycarbonyl mit 1 bis 4 C-Atomen im Alkoxyrest, das durch Phenyl, Hydroxy, Alkoxy mit 1 bis 4 C-Atomen oder Alkylcarbonyloxy mit 1 bis 4 C-Atomen im Alkylrest substituiert sein kann, oder Phenylazo, das durch Cyan, Nitro, Chlor, Brom, Trifluormethyl, Alkyl mit 1 bis 4 C-Atomen, Alkoxy mit 1 bis 4 C-Atomen, Alkoxycarbonyl mit 1 bis 4 C-Atomen in der Alkoxygruppe ein-, zwei- oder dreifach (vorzugsweise ein- oder zweifach) substituiert sein kann, bedeutet, $X^3$ Wasserstoff ist oder eine der Bedeutungen von $X^1$ hat;

ein Rest der Formel III,

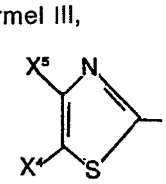

(III)

in der

$X^4$ Nitro, Cyan, Alkylsulfonyl mit 1 bis 4 C-Atomen in der Alkylgruppe, Phenylsulfonyl, das durch Methoxy, Methyl, Chlor, Brom, Nitro substituiert sein kann, Alkoxycarbonyl mit 1 bis 4 C-Atomen in der Alkylgruppe oder Phenoxycarbonyl, das im Phenylrest durch Alkyl mit 1 bis 4 C-Atomen, Alkoxy mit 1 bis 4 C-Atomen, Nitro, Fluor, Chlor oder Brom substituiert sein kann, $X^5$ Wasserstoff, Alkyl mit 1 bis 4 C-Atomen oder Phenyl, das durch Alkyl mit 1 bis 4 C-Atomen, Alkoxy mit 1 bis 4 C-Atomen, Nitro oder Halogen substituiert sein kann, bedeutet;

ein Rest der Formel IV

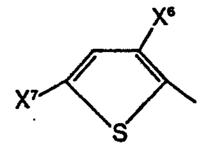

(IV)

in der $X^6$ Brom, Chlor, Nitro, Cyan, Alkoxycarbonyl mit 1 bis 4 C-Atomen in der Alkylgruppe, Alkylcarbonyl mit 1 bis 4 C-Atomen in der Alkylgruppe oder Alkylsulfonyl mit 1 bis 4 C-Atomen in der Alkylgruppe und $X^7$ Nitro, Cyan, Chlor, Brom, Alkylsulfonyl mit 1 bis 4 C-Atomen in der Alkylgruppe oder Alkoxycarbonyl mit 1 bis 4 C-Atomen in der Alkoxygruppe bedeutet;

6-Nitrobenzthiazolyl-(2) oder

5-Nitrobenzisothiazolyl-(3) ist,

K den Rest einer Kupplungskomponente der 1,4-Phenylen-, 1,4-Naphthylen-, Thiazolyl-2,5- oder 2,5-Thienyl-Reihe und

R Alkyl mit 1 bis 8 C-Atomen, das durch Hydroxy, Chlor, Brom, Cyan, Alkoxy mit 1 bis 4 C-Atomen, Hydroxyalkoxy mit 1 bis 4 C-Atomen, Alkenoxy mit 3 oder 4 C-Atomen, Cycloalkoxy mit 5 oder 6 C-Atomen, Alkylcarbonyloxy mit 2 bis 4 C-Atomen oder durch gegebenenfalls im Phenylkern noch durch Alkyl mit 1 bis 4 C-Atomen, Alkoxy mit 1 bis 4 C-Atomen (vorzugsweise Methyl oder Methoxy), Chlor, Brom oder Cyan mono- oder disubstituiertes Phenyl, Phenoxy, Benzoyloxy monosubstituiert sein kann und das zusätzlich zu den genannten Substituenten noch durch eine Hydroxygruppe substituiert sein kann; Alkenyl mit 2 bis 4 (vorzugsweise 3 oder 4) C-Atomen, das gegebenenfalls durch Hydroxy, Methoxy, Ethoxy, Chlor, Brom oder Cyan substituiert sein kann; Phenyl, das durch Alkyl mit 1 bis 4 C-Atomen, Hydroxyalkyl mit 1 bis 4 C-Atomen, Alkoxyalkyl mit insgesamt 2 bis 8 C-Atomen, Hydroxyalkoxy-alkyl mit insgesamt 2 bis 8 C-Atomen, Alkanoyloxy-alkyl mit insgesamt 2 bis 8 C-Atomen, Alkoxy mit 1 bis 4 C-Atomen, Hydroxyalkoxy mit 1 bis 4 C-Atomen, Alkoxyalkoxy mit insgesamt 2 bis 8 C-Atomen Hydroxyalkoxy-alkoxy mit insgesamt 2 bis 8 C-Atomen, Alkanoyloxy-alkoxy mit insgesamt 2 bis 8 C-Atomen, Chlor, Brom oder Nitro tri-, di- oder monosubstituiert sein kann und das als vierten Substituenten eine Methylgruppe tragen kann, bedeuten und

als Ätzmittel eine Base, die in 5%iger wässriger Lösung mindestens einen pH-Wert von 8 hervorbringt, eingesetzt wird.

2. Verfahren gemäss Anspruch 1, dadurch gekennzeichnet, dass Färbeflotten bzw. Druckpasten eingesetzt werden, die von wasserlöslichmachenden Gruppen freie Azofarbstoffe der Formel I enthalten, worin ein für K stehender Rest einer Kupplungskomponente der 1,4-Phenylenreihe der Formel VI entspricht,

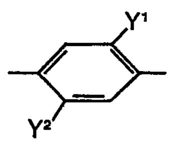

(VI)

worin $Y^1$ Wasserstoff, Halogen (insbesondere Fluor, Chlor oder Brom), Alkyl mit 1 bis 4 C-Atomen, das durch Halogen (insbesondere Chlor oder Brom), Cyan, Hydroxy, Alkanoyloxy mit 1 bis 4 C-Atomen, Alkoxy mit 1 bis 4 C-Atomen oder Alkoxycarbonyl mit 1 bis 4 C-Atomen in dem Alkoxyrest substituiert sein kann, oder Alkoxy mit 1 bis 4 C-Atomen, das durch Halogen (insbesondere Chlor oder Brom), Cyan, Hydroxy, Alkoxy mit 1 bis 4 C-Atomen, Hydroxyalkoxy mit 1 bis 4 C-Atomen, Alkanoyloxy mit 1 bis 4 C-Atomen oder Alkoxycarbonyl mit 1 bis 4 C-Atomen im Alkoxyrest einfach substituiert oder auch durch die Kombination OH/OH oder OH/Chlor zweifach substituiert sein kann, bedeutet und $Y^2$ eine der für $Y^1$ angegebenen Bedeutungen hat oder Alkylcarbonylamino mit 1 bis 4 C-Atomen in dem Alkylrest, das durch Chlor, Brom, Hydroxy, Alkoxy oder Hydroxyalkoxy mit 1 bis 4 C-Atomen, Alkanoyloxy mit 1 bis 4 C-Atomen, Phenoxy oder Alkoxycarbonyl mit 1 bis 4 C-Atomen substituiert sein kann, Benzoylamino, das im Phenylkern durch Hydroxy, Chlor, Alkyl mit 1 bis 4 C-Atomen oder Alkoxy mit 1 bis 4 C-Atomen ein- oder zweifach substituiert sein kann; Alkylsulfonylamino mit 1 bis 4 C-Atomen, das durch Hydroxy oder Alkoxy mit 1 bis 4 C-Atomen substituiert sein kann oder Phenylsulfonylamino, das im Phenylkern durch Hydroxy, Chlor, Alkyl mit 1 bis 4 C-Atomen oder Alkoxy mit 1 bis 4 C-Atomen ein- oder zweifach substituiert sein kann, bedeutet.

3. Verfahren gemäss Anspruch 1, dadurch gekennzeichnet, dass Färbeflotten bzw. Druckpasten eingesetzt werden, die von wasserlöslichmachenden Gruppen freie Azofarbstoffe der Formel I enthalten, worin ein für K stehender Rest einer Kupplungskomponente der 1,4-Naphthylenreihe der Formel VII entspricht,

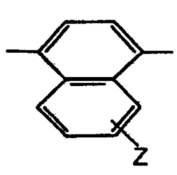

(VII)

worin Z Wasserstoff, Halogen (insbesondere Fluor, Chlor oder Brom), Alkyl mit 1 bis 4 C-Atomen, das durch Halogen (insbesondere Chlor oder Brom), Cyan, Hydroxy, Alkanoyloxy mit 1 bis 4 C-Atomen, Alkoxy mit 1 bis 4 C-Atomen oder Alkoxycarbonyl mit 1 bis 4 C-Atomen im Alkoxyrest substituiert sein kann; oder Alkoxy mit 1 bis 4 C-Atomen, das durch Halogen (insbesondere Chlor oder Brom), Cyan, Hydroxy, Alkoxy mit 1 bis 4 C-Atomen, Hydroxyalkoxy mit 1 bis 4 C-Atomen, Alkanoyloxy mit 1 bis 4 C-Atomen oder Alkoxycarbonyl mit 1 bis 4 C-Atomen im Alkoxyrest einfach substituiert oder auch durch die Kombination OH/OH oder OH/Chlor zweifach substituiert sein kann, bedeutet.

4. Verfahren gemäss Anspruch 1, dadurch gekennzeichnet, dass Färbeflotten bzw. Druckpasten eingesetzt werden, die von wasserlöslichmachenden Gruppen freie Azofarbstoffe der Formel I enthalten, worin R Alkyl mit 5 bis 8 C-Atomen, Alkyl mit 1 bis 4 C-Atomen, das durch Hydroxy, Chlor, Cyan, Alkoxy mit 1 bis 4 C-Atomen, Hydroxyalkoxy mit 1 bis 4 C-Atomen, Alkylcarbonyloxy mit 2 bis 4 C-Atomen, durch gegebenenfalls im Phenylkern noch durch Alkyl mit 1 oder 2 C-Atomen, Alkoxy mit 1 oder 2 C-Atomen (vorzugsweise Methyl oder Methoxy) oder Chlor mono- oder disubstituiertes Phenyl, Phenoxy, Benzoyloxy monosubstituiert sein kann und das zusätzlich zu den genannten Substituenten noch durch eine Hydroxygruppe substituiert sein kann; Alkenyl mit 2 bis 4 (vorzugsweise 3 oder 4) C-Atomen, Phenyl, das durch Alkyl mit 1 oder 2 C-Atomen, Alkoxy mit 1 oder 2 C-Atomen, Chlor, Brom oder Nitro (vorzugsweise Methyl, Methoxy oder Nitro), tri-, di- oder monosubstituiert sein kann und der als vierten Substituenten eine Methylgruppe tragen kann, bedeutet.

5. Verfahren gemäss Anspruch 1, dadurch gekennzeichnet, dass Färbeflotten bzw. Druckpasten eingesetzt werden, die Mischungen der von wasserlöslichmachenden Gruppen freien Azofarbstoffe der Formel I enthalten, worin die Symbole D, K und R die in den Ansprüchen 1 bis 4 genannten Bedeutungen haben.

6. Von wasserlöslichmachenden Gruppen freie Azofarbstoffe der Formel I

$$D{-}N{=}N{-}K{-}NHSO_2R \qquad (I)$$

worin D ein Rest der Formel III

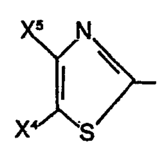

(III)

oder ein Rest der Formel IV

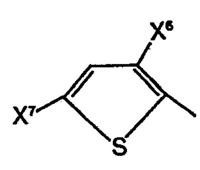

(IV)

ist und K, R, $X^4$, $X^5$, $X^6$ und $X^7$ die im Anspruch 1 angegebenen Bedeutungen haben.

7. Von wasserlöslichmachenden Gruppen freie Azofarbstoffe der Formel I

$$D{-}N{=}N{-}K{-}NHSO_2R \qquad (I)$$

worin D und R die in Anspruch 1 angegebene Bedeutung haben und K ein Rest der 1,4-Naphthylenreihe, der Thiazolyl-2,5-Reihe oder der 2,5-Thienylreihe ist.

8. Von wasserlöslichmachenden Gruppen freie Azofarbstoffe der Formel I

$$D{-}N{=}N{-}K{-}NHSO_2R \qquad (I)$$

worin D ein Rest der Formel II

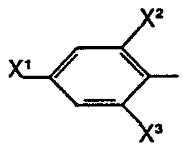

(II)

ist, worin $X^1$, $X^2$ und $X^3$ die im Anspruch 1 angegebenen Bedeutungen haben,

K ein Rest der Formel VI

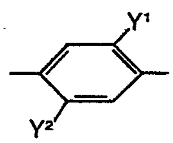

(VI)

ist, worin $Y^1$ Wasserstoff, Halogen (insbesondere Fluor, Chlor oder Brom), Alkyl mit 1 bis 4 C-Atomen, das durch Halogen (insbesondere Chlor oder Brom), Cyan, Hydroxy, Alkanoyloxy mit 1 bis 4 C-Atomen, Alkoxy mit 1 bis 4 C-Atomen oder Alkoxycarbonyl mit 1 bis 4 C-Atomen in dem Alkoxyrest substituiert sein kann; oder Alkoxy mit 1 bis 4 C-Atomen, das durch Halogen (insbesondere Chlor oder Brom), Cyan, Hydroxy, Alkoxy mit 1 bis 4 C-Atomen Hydroxyalkoxy mit 1 bis 4 C-Atomen, Alkanoyloxy mit 1 bis 4 C-Atomen oder Alkoxycarbonyl mit 1 bis 4 C-Atomen im Alkoxyrest einfach substituiert oder auch durch die Kombination OH/OH oder OH/Chlor zweifach substituiert sein kann, bedeutet und $Y^2$ eine der für $Y^1$ angegebenen Bedeutungen mit Ausnahme von Alkoxy hat oder Alkylcarbonylamino mit 1 bis 4 C-Atomen in dem Alkylrest, das durch Chlor, Brom, Hydroxy, Alkoxy oder Hydroxyalkoxy mit 1 bis 4 C-Atomen, Alkanoyloxy mit 1 bis 4 C-Atomen, Phenoxy oder Alkoxycarbonyl mit 1 bis 4 C-Atomen substituiert sein kann; Benzoylamino, das im Phenylkern durch Hydroxy, Chlor, Alkyl mit 1 bis 4 C-Atomen oder Alkoxy mit 1 bis 4 C-Atomen ein- oder zweifach substituiert sein kann; Alkylsulfonylamino mit 1 bis 4 C-Atomen, das durch Hydroxy oder Alkoxy mit 1 bis 4 C-Atomen substituiert sein kann oder Phenylsulfonylamino, das im Phenylkern durch Hydroxy, Chlor, Alkyl mit 1 bis 4 C-Atomen oder Alkoxy mit 1 bis 4 C-Atomen ein- oder zweifach substituiert sein kann, bedeutet und

R Phenyl ist, das durch Alkyl mit 1 oder 2 C-Atomen, Alkoxy mit 1 oder 2 C-Atomen, Chlor, Brom oder Nitro (vorzugsweise Methyl, Methoxy oder Nitro), tri-, di- oder monosubstituiert sein kann und das als vierten Substituenten eine Methylgruppe tragen kann.

9. Verfahren zur Herstellung der von wasserlöslichmachenden Gruppen freien Azofarbstoffe der Formel I

$$D{-}N{=}N{-}K{-}NHSO_2R \qquad (I)$$

worin D, K und R die in den Ansprüchen 6 bis 8 genannten Bedeutungen haben, dadurch gekennzeichnet, dass man

a) einen Farbstoff der Formel XIV

$$D{-}N{=}N{-}K{-}NH_2 \qquad (XIV)$$

mit sulfonylierenden Mitteln, die den Rest $-SO_2R$ einführen, insbesondere mit Halogeniden von Sulfonsäuren der Formel $Hal{-}SO_2{-}R$, worin Hal ein Halogenatom ist und R die obengenannten Bedeutungen hat, in an sich bekannter Weise umsetzt; oder

b) indem man in an sich bekannter Weise ein Amin der Formel $D{-}NH_2$, worin D die obengenannten Bedeutungen hat, diazotiert und mit einem Sulfonamid der Formeln X, XI, XII oder XIII

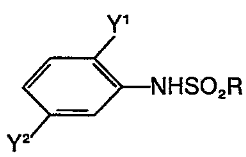

(X)

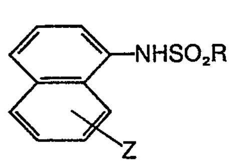

(XI)

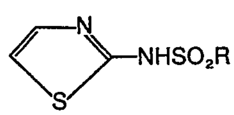

(XII)

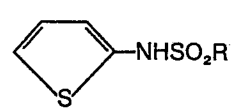

(XIII)

worin $Y^1$, $Y^2$, Z und R die in den Ansprüchen 6 bis 8 angegebenen Bedeutungen haben, kuppelt.

**Claims**

1. Process for the production of white or variously coloured designs on a coloured substrate on textile materials containing, or consisting of, hydrophobic, synthetic fibres, in particular polyester fibres, by impregnating the materials with dye liquors containing, in addition to customary dyeing and padding auxiliaries, dyestuffs which are dischargeable to white and, if appropriate, dyestuffs resistant to discharging agents, drying or incipiently drying the padded materials, printing the materials with an alkaline discharge reserve paste which, if desired, also contains, in addition to the discharging agent, dyestuffs resistant to discharging agents, and subsequently subjecting the materials to a heat treatment at temperatures from 100 to 230 °C, characterised in that the dyestuffs which are dischargeable to white which are employed are those of the formula I

D–N=N–K–$NHSO_2R$ (I)

wherein D is a radical of the formula II

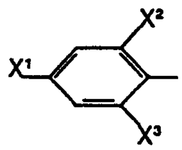

(II)

in which $X^1$ and $X^2$ independently of one another denote halogen (particularly fluorine, chlorine or bromine), nitro, cyano, trifluoromethyl, alkyl having 1 to 4 C atoms or alkylsulphonyl which has 1 to 4 C atoms and can be substituted by hydroxyl, methoxy, ethoxy, hydroxyethoxy, methoxyethoxy, ethoxyethoxy, chlorine, bromine or cyano, or denote phenylsulphonyl which can be substituted by methoxy, methyl, chlorine, bromine or nitro, or denote alkylcarbonyl which has 1 to 4 C atoms in the alkyl radical and which can be substituted by hydroxyl, methoxy, ethoxy, hydroxyethoxy, methoxyethoxy, ethoxyethoxy, chlorine, bromine or cyano, or denote benzoyl wherein the phenyl radical can be substituted by alkyl having 1 to 4 C atoms, alkoxy having 1 to 4 C atoms, nitro or halogen, or denote alkoxycarbonyl which has 1 to 4 C atoms in the alkoxy radical and which can be substituted by phenyl, hydroxyl, alkoxy having 1 to 4 C atoms or alkylcarbonyloxy having 1 to 4 C atoms in the alkyl radical, or denote phenylazo which can be monosubstituted, disubstituted or trisubstituted (preferably monosubstituted or disubstituted), by cyano, nitro, chlorine, bromine, trifluoromethyl, alkyl having 1 to 4 C atoms, alkoxy having 1 to 4 C atoms, or alkoxycarbonyl having 1 to 4 C atoms in the alkoxy group, and $X^3$ is hydrogen or has one of the meanings of $X^1$; or D is a radical of the formula III

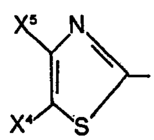

(III)

in which $X^4$ denotes nitro, cyano, alkylsulphonyl having 1 to 4 C atoms in the alkyl group, or phenylsulphonyl which can be substituted by methoxy, methyl, chlorine, bromine or nitro, or denotes alkoxycarbonyl having 1 to 4 C atoms in the alkyl group, or denotes phenoxycarbonyl which can be substituted in the phenyl radical by alkyl having 1 to 4 C atoms, alkoxy having 1 to 4 C atoms, nitro, fluorine, chlorine or bromine, and $X^5$ denotes hydrogen, alkyl having 1 to 4 C atoms, or phenyl, which can be substituted by alkyl having 1 to 4 C atoms, alkoxy having 1 to 4 C atoms, nitro or halogen; or D is a radical of the formula IV

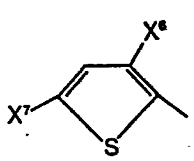

(IV)

in which $X^6$ denotes bromine, chlorine, nitro, cyano, alkoxycarbonyl having 1 to 4 C atoms in the alkyl group, alkylcarbonyl having 1 to 4 C atoms in the alkyl group or alkylsulphonyl having 1 to 4 C atoms in the alkyl group, and $X^7$ denotes nitro, cyano, chlorine, bromine, alkylsulphonyl having 1 to 4 C atoms in the alkyl group, or alkoxycarbonyl having 1 to 4 C atoms in the alkoxy group;

6-nitrobenzthiazol-2-yl or

5-nitrobenzisothiazol-3-yl,

K denotes the radical of a coupling component of the 1,4-phenylene, 1,4-naphthylene, 2,5-thiazolyl or 2,5-thienyl series and

R denotes alkyl which has 1 to 8 C atoms and which can be monosubstituted by hydroxyl, chlorine, bromine, cyano, alkoxy having 1 to 4 C atoms, hydroxyalkoxy having 1 to 4 C atoms, alkenoxy having 3 or 4 C atoms, cycloalkoxy having 5 or 6 C atoms, alkylcarbonyloxy having 2 to 4 C atoms, or phenyl, phenoxy or benzoyloxy, each of which is, in addition, optionally monosubstituted or disubstituted in the phenyl nucleus by alkyl having 1 to 4 C atoms, alkoxy having 1 to 4 C atoms (preferably methyl or methoxy), chlorine, bromine or cyano, and which, in addition to the said substituents, can also be substituted by a hydroxyl group; alkenyl which has 2 to 4 (preferably 3 or 4) C atoms and which can optionally be substituted by hydroxyl, methoxy, ethoxy, chlorine, bromine or cyano; phenyl which can be trisubstituted, disubstituted or monosubstituted by alkyl having 1 to 4 C atoms, hydroxyalkyl having 1 to 4 C atoms, alkoxyalkyl having a total of 2 to 8 C atoms, hydroxyalkoxyalkyl having a total of 2 to 8 C atoms, alkanoyloxyalkyl having a total of 2 to 8 C atoms, alkoxy having 1 to 4 C atoms, hydroxyalkoxy having 1 to 4 C atoms, alkoxyalkoxy having a total of 2 to 8 C atoms, hydroxyalkoxyalkoxy having a total of 2 to 8 C atoms, alkanoyloxyalkoxy having a total of 2 to 8 C atoms, chlorine, bromine or nitro, and which can carry a methyl group as a fourth substituent, and a base which produces a pH value of at least 8 in a 5% strength aqueous solution is employed as the discharging agent.

2. Process according to Claim 1, characterised in that dye liquors or printing pastes are employed which contain azo dyestuffs which are free from groups imparting solubility in water and have the formula I wherein a radical represented by K corresponds to a coupling component of the 1,4-phenylene series of the formula VI

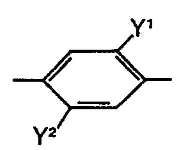

(VI)

wherein $Y^1$ denotes hydrogen, halogen (particularly fluorine, chlorine or bromine), or alkyl which has 1 to 4 C atoms and which can be substituted by halogen (particularly chlorine or bromine), cyano, hydroxyl, alkanoyloxy having 1 to 4 C atoms, alkoxy having 1 to 4 C atoms or alkoxycarbonyl having 1 to 4 C atoms in the alkoxy radical; or $Y^1$ denotes alkoxy which has 1 to 4 C

atoms and which can be monosubstituted by halogen (particularly chlorine or bromine), cyano, hydroxyl, alkoxy having 1 to 4 C atoms, hydroxyalkoxy having 1 to 4 C atoms, alkanoyloxy having 1 to 4 C atoms, or alkoxycarbonyl having 1 to 4 C atoms in the alkoxy radical, or which can be disubstituted by the combination OH/OH or OH/chlorine, and $Y^2$ has one of the meanings indicated for $Y^1$ or denotes alkylcarbonylamino which has 1 to 4 C atoms in the alkyl radical and which can be substituted by chlorine, bromine, hydroxy, alkoxy or hydroxyalkoxy having 1 to 4 C atoms, alkanoyloxy having 1 to 4 C atoms, phenoxy or alkoxycarbonyl having 1 to 4 C atoms, or $Y^2$ denotes benzoylamino which can be monosubstituted or disubstituted in the phenyl nucleus by hydroxyl, chlorine, alkyl having 1 to 4 C atoms, or alkoxy having 1 to 4 C atoms; or $Y^2$ denotes alkylsulphonylamino which has 1 to 4 C atoms and which can be substituted by hydroxyl or alkoxy having 1 to 4 C atoms, or $Y^2$ denotes phenylsulphonylamino which can be monosubstituted or disubstituted in the phenyl nucleus by hydroxyl, chlorine, alkyl having 1 to 4 C atoms, or alkoxy having 1 to 4 C atoms.

3. Process according to Claim 1, characterised in that dye liquors or printing pastes are employed which contain azo dyestuffs which are free from groups imparting solubility in water and have the formula I wherein a radical represented by K corresponds to a coupling component of the 1,4-naphthylene series of the formula VII

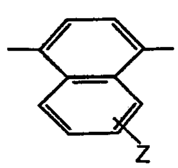

(VII)

wherein Z denotes hydrogen, halogen (particularly fluorine, chlorine or bromine), or alkyl which has 1 to 4 C atoms and which can be substituted by halogen (particularly chlorine or bromine), cyano, hydroxyl, alkynoyloxy having 1 to 4 C atoms, alkoxy having 1 to 4 C atoms, or alkoxycarbonyl having 1 to 4 C atoms in the alkoxy radical; or Z denotes alkoxy which has 1 to 4 C atoms and which can be monosubstituted by halogen (particularly chlorine or bromine), cyano, hydroxyl, alkoxy having 1 to 4 C atoms, hydroxyalkoxy having 1 to 4 C atoms, alkanoyloxy having 1 to 4 C atoms or alkoxycarbonyl having 1 to 4 C atoms in the alkoxy radical, or which can also be disubstituted by the combination OH/OH or OH/chlorine.

4. Process according to Claim 1, characterised in that dye liquors or printing pastes are employed which contain azo dyestuffs which are free from groups imparting solubility in water and have the formula I wherein R denotes alkyl having 5 to 8 C atoms, alkyl which has 1 to 4 C atoms and which can be monosubstituted by hydroxyl, chlorine, cyano, alkoxy having 1 to 4 C atoms, hydroxyalkoxy having 1 to 4 C atoms, alkylcarbonyloxy having 2 to 4 C atoms, or phenyl, phenoxy or benzoyloxy, each of which is optionally additionally monosubstituted or disubstituted in the phenyl nucleus by alkyl having 1 or 2 C atoms, alkoxy having 1 or 2 C atoms (preferably methyl or methoxy), or chlorine, and R can, in addition to the said substituents, also be substituted by a hydroxyl group; and R denotes alkenyl having 2 to 4 (preferably 3 or 4), C atoms, or phenyl which can be trisubstituted, disubstituted or monosubstituted by alkyl having 1 or 2 C atoms, alkoxy having 1 or 2 C atoms, chlorine, bromine or nitro (preferably methyl, methoxy or nitro), and which can carry a methyl group as a fourth substituent.

5. Process according to Claim 1, characterised in that dye liquors or printing pastes which contain mixtures of the azo dyestuffs which are free from groups imparting solubility in water and have the formula I wherein the symbols D, K and R have the meanings mentioned in Claims 1 to 4, are employed.

6. Azo dyestuffs which are free from groups imparting solubility in water and which have the formula I

$$D\text{–}N{=}N\text{–}K\text{–}NHSO_2R \quad (I)$$

wherein D is a radical of the formula III

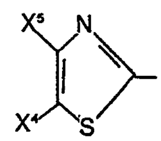

(III)

or a radical of the formula IV

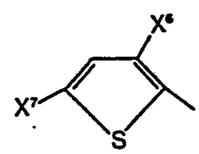

(IV)

and K, R, $X^4$, $X^5$, $X^6$ and $X^7$ have the meanings indicated in Claim 1.

7. Azo dyestuffs which are free from groups imparting solubility in water and which have the formula I

$$D\text{–}N{=}N\text{–}K\text{–}NHSO_2R \quad (I)$$

wherein D and R have the meanings indicated in Claim 1 and K is a radical of the 1,4-naphthylene series, the 2,5-thiazolyl series or the 2,5-thienyl series.

8. Azo dyestuffs which are free from groups imparting solubility in water and which have the formula I

$$D\text{–}N{=}N\text{–}K\text{–}NHSO_2R \quad (I)$$

wherein D is a radical of the formula II

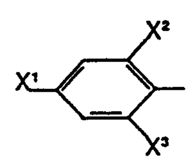

(II)

wherein $X^1$, $X^2$ and $X^3$ have the meanings indicated in Claim 1, and K is a radical of the formula VI

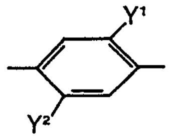
(VI)

wherein $Y^1$ denotes hydrogen, halogen (particularly fluorine, chlorine or bromine), alkyl having 1 to 4 C atoms, which can be substituted by halogen (particularly chlorine or bromine), cyano, hydroxyl, alkanoyloxy having 1 to 4 C atoms, alkoxy having 1 to 4 C atoms or alkoxycarbonyl having 1 to 4 C atoms in the alkoxy radical; or alkoxy having 1 to 4 C atoms which can be monosubstituted by halogen (particularly chlorine or bromine), cyano, hydroxyl, alkoxy having 1 to 4 C atoms, hydroxyalkoxy having 1 to 4 C atoms, alkanoyloxy having 1 to 4 C atoms or alkoxycarbonyl having 1 to 4 C atoms in the alkoxy radical, or can also be disubstituted by the combination OH/OH or OH/chlorine, and $Y^2$ has one of the meanings given for $Y^1$ with the exception of alkoxy or denotes alkylcarbonylamino which has 1 to 4 C atoms in the alkyl radical and can be substituted by chlorine, bromine, hydroxyl, alkoxy or hydroxyalkoxy having 1 to 4 C atoms, alkanoyloxy having 1 to 4 C atoms, phenoxy or alkoxycarbonyl having 1 to 4 C atoms; benzoylamino which can be monosubstituted or disubstituted in the phenyl radical by hydroxyl, chlorine, alkyl having 1 to 4 C atoms, or alkoxy having 1 to 4 C atoms; alkylsulfonylamino which has 1 to 4 C atoms and can be substituted by hydroxyl or alkoxy having 1 to 4 C atoms or phenylsulfonylamino which can be monosubstituted or disubstituted in the phenyl nucleus by hydroxyl, chlorine, alkyl having 1 to 4 C atoms or alkoxy having 1 to 4 C atoms; and R is phenyl which can be trisubstituted, disubstituted or monosubstituted by alkyl having 1 or 2 C atoms, alkoxy having 1 or 2 C atoms, chlorine, bromine or nitro, preferably methyl, methoxy or nitro, and which can carry a methyl group as a fourth substituent.

9. Process for the manufacture of azo dyestuffs which are free from groups imparting solubility in water and have the formula I

$$D\text{–}N=N\text{–}K\text{–}NHSO_2R \qquad (I)$$

wherein D, K and R have the meanings indicated in Claims 6 to 8, characterised in that

a) a dyestuff of the formula XIV

$$D\text{–}N=N\text{–}K\text{–}NH_2 \qquad (XIV)$$

is reacted in a manner which is in itself known with sulphoxylating agents which introduce the radical $-SO_2R$, in particular with halides of sulphonic acids of the formula $Hal\text{–}SO_2\text{–}R$ wherein Hal is a halogen atom and R has the abovementioned meanings; or

b) an amine of the formula $D\text{–}NH_2$ wherein D has the abovementioned meanings, is diazotised in a manner which is in itself known and coupled with a sulphonamide of the formulae X, XI, XII or XIII

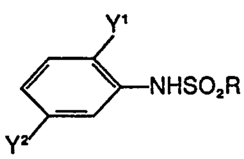
(X)

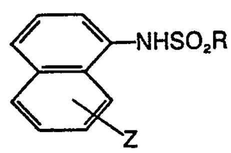
(XI)

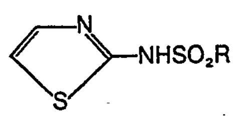
(XII)

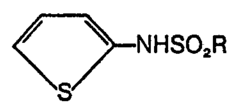
(XIII)

wherein $Y^1$, $Y^2$, Z and R have the meanings indicated in Claims 6 to 8.

## Revendications

1. Procédé de réalisation de dessins blancs ou de diverses couleurs sur fond coloré sur des matières textiles contenant ou constituées de fibres synthétiques hydrophobes, en particulier de fibres de polyester, par imprégnation des matières avec des bains de teinture qui contiennent, outre des adjuvants de teinture et de foulardage habituels, des colorants rongeables en blanc et le cas échéant des colorants résistant aux rongeants, séchage ou pré-séchage des matières foulardées, impression d'une pâte de réserve rongeante alcaline qui contient si on le désire, outre le rongeant, des colorants résistant aux rongeants, puis traitement thermique à des températures de 100 à 230 °C, caractérisé en ce qu'on utilise comme colorants rongeables en blanc des colorants répondant à la formule I:

$$D\text{–}N=N\text{–}K\text{–}NHSO_2R \qquad (I)$$

dans laquelle D désigne un radical répondant à la formule II

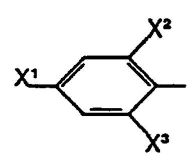
(II)

dans laquelle $X^1$ et $X^2$ désignent indépendamment l'un de l'autre un halogène (en particulier le fluor, le chlore ou le brome), un nitro, un cyano, un trifluorométhyle, un alkyle en $C_1$ à $C_4$, un alkylsulfonyle en $C_1$ à $C_4$, qui peut être substitué par un hydroxy, un méthoxy, un éthoxy, un hydroxyéthoxy, un méthoxyéthoxy, un éthoxyéthoxy, un

chlore, un brome ou un cyano, un phénylsulfonyle, qui peut être substitué par un méthoxy, un méthyle, un chlore, un brome ou un nitro, un alkylcarbonyle ayant 1 à 4 atomes de C dans le radical alkyle, qui peut être substitué par un hydroxy, un méthoxy, un éthoxy, un hydroxyéthoxy, un méthoxyéthoxy, un éthoxyéthoxy, un chlore, un brome ou un cyano, un benzoyle dans lequel le radical phényle peut être substitué par un alkyle en $C_1$ à $C_4$, un alcoxy en $C_1$ à $C_4$, un nitro ou un halogène, un alcoxy carbonyle ayant 1 à 4 atomes de C dans le radical alcoxy, qui peut être substitué par un phényle, un hydroxy, un alcoxy en $C_1$ à $C_4$ ou un alkylcarbonyloxy ayant 1 à 4 atomes de C dans le radical alkyle, ou un phénylazo, qui peut être substitué une, deux ou trois fois (de préférence une ou deux fois) par un cyano, un nitro, un chlore, un brome, un trifluorométhyle, un alkyle en $C_1$ à $C_4$, un alcoxy en $C_1$ à $C_4$, un alcoxycarbonyle ayant 1 à 4 atomes de carbone dans le groupe alcoxy, $X^3$ est l'hydrogène ou a une des significations de $X^1$;

un radical répondant à la formule III,

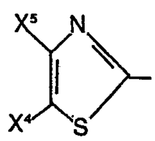

(III)

dans laquelle $X^4$ désigne un nitro, un cyano, un alkylsulfonyle ayant 1 à 4 atomes de C dans le groupe alkyle, un phénylsulfonyle qui peut être substitué par un méthoxy, un méthyle, un chlore, un brome, un nitro; un alcoxycarbonyle ayant 1 à 4 atomes C dans un groupe alkyle ou un phénoxycarbonyle qui peut être substitué dans le radical phényle par un alkyle en $C_1$ à $C_4$, un alcoxy en $C_1$ à $C_4$, un nitro, un fluor, un chlore ou un brome, $X^5$ désigne l'hydrogène, un alkyle en $C_1$ à $C_4$ ou un phényle qui peut être substitué par un alkyle en $C_1$ à $C_4$, un alcoxy en $C_1$ à $C_4$, un nitro ou un halogène;

un radical répondant à la formule IV

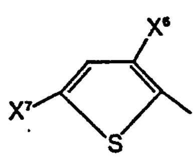

(IV)

dans laquelle $X^6$ désigne un brome, un chlore, un nitro, un cyano, un alcoxycarbonyle ayant 1 à 4 atomes de C dans le groupe alkyle, un alkylcarbonyle ayant 1 à 4 atomes de C dans le groupe alkyle ou un alkylsulfonyle ayant 1 à 4 atomes de C dans le groupe alkyle et $X^7$ un nitro, un cyano, un chlore, un brome, un alkylsulfonyle ayant 1 à 4 atomes de C dans le groupe alkyle ou un alcoxycarbonyle ayant 1 à 4 atomes de C dans le groupe alcoxy;

un 6-nitrobenzothiazolyl-(2) ou

un 5-nitrobenzoisothiazolyl-(3),

K désigne le radical d'un constituant de copulation de la série du 1,4-phénylène-, du 1,4-naphtylène, du thiazolyle-2,5-, ou du 2,5-thiényle et

R désigne un alkyle en $C_1$ à $C_8$ qui peut être monosubstitué par un hydroxy, un chlore, un brome, un cyano, un alcoxy en $C_1$ à $C_4$, un hydroxyalcoxy en $C_1$ à $C_4$, un alcénoxy en $C_3$ ou $C_4$, un cycloalcoxy en $C_5$ ou $C_6$, un alkylcarbonyloxy en $C_2$ à $C_4$, ou par un phényle, phénoxy ou benzoyloxy qui peut éventuellement encore être mono- ou disubstitué dans le noyau phényle par un alkyle en $C_1$ à $C_4$, un alcoxy en $C_1$ à $C_4$ (de préférence méthyle ou méthoxy), un chlore, un brome ou un cyano, et qui peut, en plus des substituants indiqués, être encore substitué par un groupe hydroxy; un alcényle ayant 2 à 4 (de préférence 3 ou 4) atomes de C, qui peut être substitué par un hydroxy, un méthoxy, un éthoxy, un chlore, un brome, ou un cyano; un phényle, qui peut être tri-, di- ou monosubstitué par un alkyle en $C_1$ à $C_4$, un hydroxyalkyle en $C_1$ à $C_4$, un alcoxyalkyle ayant en tout 2 à 8 atomes de C, un hydroxyalcoxyalkyle ayant en tout 2 à 8 atomes de C, un alcanoyloxyalkyle ayant en tout 2 à 8 atomes de C, un alcoxy en $C_1$ à $C_4$, un hydroxyalcoxy en $C_1$ à $C_4$, un alcoxyalcoxy ayant en tout 2 à 8 atomes de C, un hydroxyalcoxy-alcoxy ayant en tout 2 à 8 atomes de C, un alcanoyloxy-alcoxy ayant en tout 2 à 8 atomes de C, un chlore, un brome, un nitro et qui peut porter comme quatrième substituant un groupe méthyle et on utilise comme agent rongeant alcalin une base qui produit en solution aqueuse à 5% un pH d'au moins 8.

2. Procédé suivant la revendication 1, caractérisé en ce qu'on utilise des bains de teinture ou des pâtes d'impression qui contiennent des colorants azoïques exempts de groupes hydrosolubilisants répondant à la formule I dans laquelle le radical représenté par K correspond à un constituant de copulation de la série des phénylènes-1,4 répondant à la formule VI:

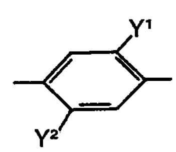

(VI)

dans laquelle $Y^1$ désigne l'hydrogène, un halogène (en particulier le fluor, le chlore ou le brome), un alkyle en $C_1$ à $C_4$, qui peut être substitué par un halogène (en particulier chlore ou brome), un cyano, un hydroxy, un alcanoyloxy en $C_1$ à $C_4$, un alcoxy en $C_1$ à $C_4$ ou un alcoxy carbonyle ayant 1 à 4 atomes de C dans le radical alcoxy, ou un alcoxy en $C_1$ à $C_4$ qui peut être monosubstitué par un halogène (en particulier le chlore ou le brome), un cyano, un hydroxy, un alcoxy en $C_1$ à $C_4$, un hydroxy-alcoxy en $C_1$ à $C_4$, un alcanoyloxy en $C_1$ à $C_4$ ou un alcoxy-carbonyle ayant 1 à 4 atomes de C dans le radical alcoxy, ou encore disubstitué par la combinaison OH/OH ou OH/chlore, et $Y^2$ a une des significations indiquées par $Y^1$ ou désigne un alkylcarbonylamino ayant 1 à 4 atomes de C dans le radical alkyle, qui peut être substitué par un chlore, un brome, un hydroxy, un alcoxy ou un hydroxyalcoxy en $C_1$ à $C_4$, un alcanoyloxy en $C_1$ à $C_4$; un phénoxy ou un alcoxycarbonyle en $C_1$ à $C_4$, un benzoylamino qui peut être mono- ou disubstitué dans le noyau phényle par un hydroxy, un chlore, un alkyle en $C_1$ à $C_4$ ou un alcoxy en $C_1$ à $C_4$; un alkylsulfonylamino

en $C_1$ à $C_4$, qui peut être substitué par un hydroxy ou un alcoxy en $C_1$ à $C_4$, ou un phényl-sulfonylamino qui peut être mono- ou disubstitué dans le noyau phényle par un hydroxy, un chlore, un alkyle en $C_1$ à $C_4$ ou un alcoxy en $C_1$ à $C_4$.

3. Procédé suivant la revendication 1, caractérisé en ce qu'on utilise des bains de teinture ou des pâtes d'impression qui contiennent des colorants azoïques exempts de groupes hydrosolubilisants répondant à la formule I, dans laquelle le radical désigné par K correspond à un constituant de copulation de la série du naphtylène-1,4 répondant à la formule VII:

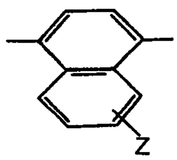

(VII)

dans laquelle Z désigne l'hydrogène, un halogène (en particulier le fluor, le chlore ou le brome), un alkyle en $C_1$ à $C_4$, qui peut être substitué par un halogène (en particulier le chlore ou le brome), un cyano, un hydroxy, un alcanoyloxy en $C_1$ à $C_4$, un alcoxy en $C_1$ à $C_4$ ou un alcoxy-carbonyle ayant 1 à 4 atomes de C dans le radical alcoxy; ou un alcoxy en $C_1$ à $C_4$, qui peut être monosubstitué par un halogène (en particulier le chlore ou le brome), un cyano, un hydroxy, un alcoxy en $C_1$ à $C_4$, un hydroxyalcoxy en $C_1$ à $C_4$, un alcanoyloxy en $C_1$ à $C_4$ ou un alcoxycarbonyle ayant 1 à 4 atomes de C dans le radical alcoxy, ou encore disubstitué par la combinaison OH/OH ou OH/chlore.

4. Procédé suivant la revendication 1, caractérisé en ce qu'on utilise des bains de teinture ou des pâtes d'impression qui contiennent des colorants azoïques exempts de groupes hydrosolubilisants répondant à la formule I, dans laquelle R désigne un alkyle en $C_5$ à $C_8$, un alkyle en $C_1$ à $C_4$ qui peut être monosubstitué par un hydroxy, un chlore, un cyano, un alcoxy en $C_1$ à $C_4$, un hydroxyalcoxy en $C_1$ à $C_4$, un alkylcarbonyloxy en $C_2$ à $C_4$, par un phényle mono- ou di-substitué le cas échéant dans le noyau phényle par un alkyle en $C_1$ ou $C_2$, un alcoxy en $C_1$ ou $C_2$ (de préférence méthyle ou méthoxy) ou un chlore, un phénoxy, un benzoyloxy, et qui peut être substitué en plus des substituants indiqués, par un groupe hydroxy; un alcényle en $C_2$ à $C_4$ (de préférence en $C_3$ ou $C_4$), un phényle qui peut être tri-, di- ou monosubstitué par un alkyle en $C_1$ ou $C_2$, un alcoxy en $C_1$ ou $C_2$, un chlore, un brome ou un nitro (de préférence un méthyle, un méthoxy ou un nitro), et qui peut contenir comme quatrième substituant un groupe méthyle.

5. Procédé suivant la revendication 1, caractérisé en ce qu'on utilise des bains de teinture ou des pâtes d'impression qui contiennent des mélanges des colorants azoïques exempts de groupes hydrosolubilisants répondant à la formule I, dans laquelle les symboles D, K et R ont les significations indiquées dans les revendications 1 à 4.

6. Colorants azoïques exempts de groupes hydrosolubilisants répondant à la formule I:

$$D{-}N{=}N{-}K{-}NHSO_2R \qquad (I)$$

dans laquelle D est un radical répondant à la formule III:

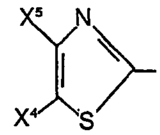

(III)

ou un radical répondant à la formule IV:

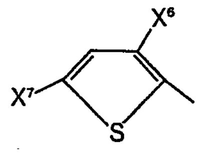

(IV)

et K, R, $X^4$, $X^5$, $X^6$ et $X^7$ ont les significations indiquées dans la revendication 1.

7. Colorants azoïques exempts de groupes hydrosolubilisants répondant à la formule I:

$$D{-}N{=}N{-}K{-}NHSO_2R \qquad (I)$$

dans laquelle D et R ont la signification indiquée dans la revendication 1 et K est un radical de la série du naphtylène-1,4, du 2,5-thiazolyle ou du thiényle-2,5.

8. Colorants azoïques exempts de groupes hydrosolubilisants répondant à la formule I:

$$D{-}N{=}N{-}K{-}NHSO_2R \qquad (I)$$

dans laquelle D est un radical répondant à la formule II:

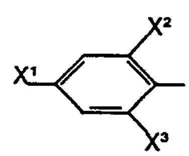

(II)

dans laquelle $X^1$, $X^2$ et $X^3$ ont les significations indiquées dans la revendication 1,

K est un radical répondant à la formule VI:

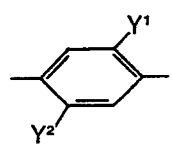

(VI)

dans laquelle $Y^1$ est l'hydrogène, un halogène (en particulier le fluor, le chlore ou le brome), un alkyle en $C_1$ à $C_4$, qui peut être substitué par un halogène (en particulier le chlore ou le brome), un cyano, un hydroxy, un alcanoyloxy en $C_1$ à $C_4$, un alcoxy en $C_1$ à $C_4$ ou un alcoxycarbonyle ayant 1 à 4 atomes de C dans le radical alcoxy; ou un alcoxy en $C_1$ à $C_4$, qui peut être monosubstitué par un halogène, (en particulier le chlore ou le brome), un cyano, un hydroxy, un alcoxy en $C_1$ à $C_4$, un hydroxyalcoxy en $C_1$ à $C_4$, un alcanoyloxy en $C_1$ à $C_4$ ou un alcoxycarbonyle ayant 1 à 4 atomes de C dans le radical alcoxy, ou encore disubstitué par

la combinaison OH/OH ou OH/chlore et $Y^2$ a une des significations indiquées pour $Y^1$ à l'exception d'un alcoxy, ou un alkylcarbonylamino ayant 1 à 4 atomes de C dans le radical alkyle, qui peut être substitué par un chlore, un brome, un hydroxy, un alcoxy ou un hydroxyalcoxy en $C_1$ à $C_4$, un alcanoyloxy en $C_1$ à $C_4$, un phénoxy ou un alcoxycarbonyle en $C_1$ à $C_4$; un benzoylamino, qui peut être mono- ou disubstitué dans le noyau phényle par un hydroxy, un chlore, un alkyle en $C_1$ à $C_4$ ou un alcoxy en $C_1$ à $C_4$; un alkylsulfonylamino en $C_1$ à $C_4$, qui peut être substitué par un hydroxy ou un alcoxy en $C_1$ à $C_4$ ou un phénylsulfonylamino, qui peut être mono- ou disubstitué dans le noyau phényle par un hydroxy, un chlore, un alkyle en $C_1$ à $C_4$ ou un alcoxy en $C_1$ à $C_4$, et K est un phényle, qui peut être tri-, di- ou monosubstitué par un alkyle en $C_1$ ou $C_2$, un alcoxy en $C_1$ ou $C_2$, un chlore, un brome ou un nitro (de préférence un méthyle, un méthoxy ou un nitro) et qui peut porter comme quatrième substituant un groupe méthyle.

9. Procédé de préparation des colorants azoïques exempts de groupes hydrosolubilisants répondant à la formule I:

$$D{-}N{=}N{-}K{-}NHSO_2R \qquad (I)$$

dans laquelle D, K et R ont les significations indiquées dans les revendications 6 à 8, caractérisé en ce que

a) on fait réagir un colorant répondant à la formule XIV:

$$D{-}N{=}N{-}K{-}NH_2$$

avec des agents de sulfonylation qui introduisent le radical $-SO_2R$, en particulier avec des halogènes d'acides sulfoniques répondant à la formule $Hal{-}SO_2R$, dans laquelle Hal est un atome d'halogène et R a les significations indiquées ci-dessus, d'une manière connue en soi; ou

b) en ce qu'on diazote d'une manière connue en soi une amine répondant à la formule $D{-}NH_2$, dans laquelle D a les significations ci-dessus et on la copule avec un sulfamide répondant aux formules X, XI, XII ou XIII

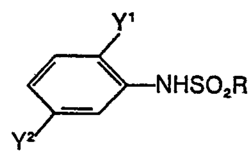

(X)

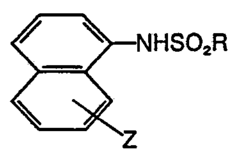

(XI)

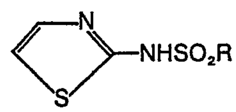

(XII)

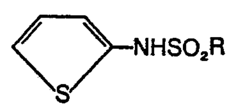

(XIII)

dans lesquelles $Y^1$, $Y^2$, Z et R ont les significations indiquées dans les revendications 6 à 8.